# EUROPEAN PATENT SPECIFICATION

(11) **EP 2 577 412 B1**
(45) Date of publication and mention of the grant of the patent: **16.10.2019**
(21) Application number: 11787377.8
(22) Date of filing: 25.05.2011
(51) Int. Cl.: G05B 13/04

(54) **SYSTEM AND METHOD FOR PROCESS MANAGEMENT IN A MATERIALS HANDLING FACILITY**
SYSTEM UND VERFAHREN FÜR PROZESSMANAGEMENT IN EINER MATERIALVERARBEITUNGSANLAGE
SYSTÈME ET PROCÉDÉ DE GESTION DE PROCESSUS DANS UNE INSTALLATION DE MANUTENTION

(30) Priority: 26.05.2010 US 788113; 26.05.2010 US 788130; 26.05.2010 US 788124; 26.05.2010 US 788117
(43) Date of publication of application: 10.04.2013
(73) Proprietor: Amazon Technologies, Inc., Reno, NV 89507 (US)
(72) Inventor: HARA, Yusuke, Seattle, Washington 98109 (JP); ALYEA, Joseph, M., Seattle, Washington 98144-2734 (US); WONG, Cherie, G., Seattle, Washington 98144-2734 (US); NGUYEN, Natalie, T., Seattle, Washington 98144-2734 (US); ROTELLA, Christopher, David, Seattle, Washington 98144-2734 (US); DEAN, Arlen, R., Seattle, Washington 98144-2734 (US)
(74) Representative: D Young & Co LLP
(86) International application number: PCT/US2011/038007
(87) International publication number: WO 2011/150131

(56) References cited:
- US-A1- 2003 195 650
- US-A1- 2004 204 775
- US-A1- 2006 224 254
- US-A1- 2007 043 468
- US-A1- 2009 081 008
- US-A1- 2009 099 678
- US-A1- 2009 099 678
- US-A1- 2009 287 330
- Tayfur Altiok, Benjamin Melamed: "Simulation Modeling and Analysis with ARENA", 30 June 2007 (2007-06-30), REFEREX, XP040425724, pages 1-435,

## Description

### BACKGROUND

Electronic marketplaces, such as those accessible via the Internet, may include a catalog of items or products available for purchase. These items may be offered as the basis for commerce (e.g., sale or trade). In one example, customers may utilize a web browser to visit a merchant's website, select an item for purchase from the catalog, and engage in a checkout process to finalize an order for the item. The merchant may operate a fulfillment network including various facilities in order to process such orders. For instance, the merchant may include a facility that prepares shipments of purchased items. A shipment carrier may acquire such shipments from the merchant and deliver the shipments to the respective purchasing customers.

The facilities operated by the merchant may include various fulfillment processes for fulfilling orders submitted by customers. These processes may operate on items to perform various tasks, such as preparing items for shipment. In some cases, some processes may be performed in a sequential fashion. For instance, a picking process that picks items out of inventory may need to be performed before a packing process that packs the items into a shipment. In some cases, poor performance of a process may cause an accumulation of items between processes. For example, poor performance by a packing process may cause an accumulation of picked items that need to be packed for shipping. Such processing variabilities may contribute to a facility's inability to reach its full processing capability. Furthermore, some resources used to carry out these processes may have fixed capacities. Inefficiently using such resources may result in the needless expenditure of capital to expand resource capacity. EP1890212 discloses a manufacturing management method which enables to suppress an occurrence of inventory shortage or excess inventory as much as possible, and a manufacturing management method which allows energy savings when manufacturing is not performed at full capacity. Tayfur A, Benjamin M "Simulation Modeling and Analysis with ARENA", 30.06.2007, p.1-435; discloses in part IV the modelling of industrial applications in production, transportation, and information systems using ARENA.

### BRIEF DESCRIPTION OF THE DRAWINGS

Figure 1 illustrates a logical representation of the operations of a materials handling facility, according to some embodiments.
Figure 2 illustrates an example physical layout for a materials handling facility, according to some embodiments.
Figure 3 illustrates an example system configuration including a process control component, according to some embodiments.
Figure 4 illustrates a graph of measured and target throughput rates, according to some embodiments.
Figure 5 illustrates a flowchart of an example method for controlling a throughput rate of units within the materials handling facility.
Figure 6 illustrates a flowchart of an example method for generating and utilizing a second target throughput rate.
Figure 7 illustrates a flowchart of an example method for modifying a target throughput rate in response to a collection of units reaching a threshold quantity.
Figure 8 illustrates one example of a computer system suitable for implementing various elements of the system and method for process management in a materials handling facility, according to some embodiments.
Figure 9 illustrates an example system configuration including a shipment management component, according to some embodiments.
Figure 10A illustrates an example flow diagram of the generation of a release order, according to some embodiments.
Figure 10B illustrates an example product unit, according to some embodiments.
Figure 11 illustrates an example flow diagram for the release of a shipment, according to some embodiments.
Figure 12 illustrates a flowchart of an example method for generating and applying a release order for units of a shipment, according to some embodiments.
Figure 13 illustrates a flowchart of an example method for selecting a particular shipment to be released from a storage area, according to some embodiments.
Figure 14 illustrates an example flow diagram for reassigning one shipment to another shipment, according to some embodiments.
Figures 15a-15b illustrate visual representations of the sorting that may be performed in some embodiments in order to determine a shipment to which a unit should be reassigned.
Figure 16 illustrates a flowchart of an example method for reassigning a unit from a first shipment to a second shipment in order to complete the second shipment, according to some embodiments.

The present invention is set forth and characterized in the independent claims, while the dependent claims describe other characteristics of the invention or variants to the main inventive idea. While the system and method for process management in a materials handling facility is described herein by way of example for several embodiments and illustrative drawings, those skilled in the art will recognize that the system and method for process management in a materials handling facility is not limited to the embodiments or drawings described. It should be understood, that the drawings and detailed description thereto are not intended to limit the system and method for process management in a materials handling facility to the particular form disclosed, but on the contrary, the intention is to cover all modifications, equivalents and alternatives falling within the scope of the system and method for process management in a materials handling facility as defined by the appended claims. The headings used herein are for organizational purposes only and are not meant to be used to limit the scope of the description or the claims. As used throughout this application, the word "may" is used in a permissive sense (i.e., meaning having the potential to), rather than the mandatory sense (i.e., meaning must). Similarly, the words "include," "including," and "includes" mean including, but not limited to.

### DETAILED DESCRIPTION OF EMBODIMENTS

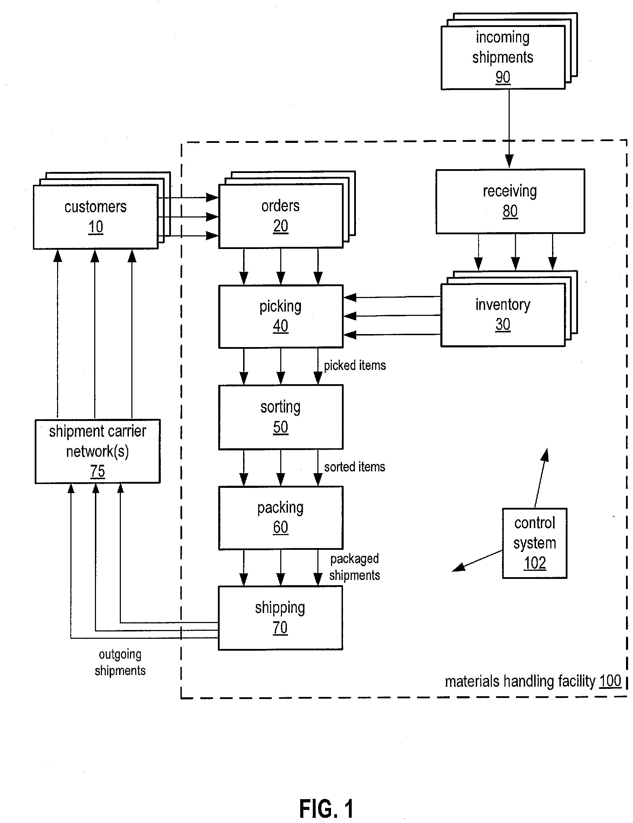

Various embodiments of a system and method for process management in a materials handling facility are described. Figure 1 illustrates a logical representation or view of the operation of a materials handling facility 100 of various embodiments of the system and method for process management in a materials handling facility. In various embodiments, a fulfillment network including multiple materials handling facilities (each of which may be configured in a manner similar to that of materials handling facility 100) may be responsible for fulfilling multiple orders, such as orders placed through an electronic commerce ("e-commerce") portal.

In various embodiments, a materials handling facility may include one or more facilities that process, store, and/or distribute units of items including but not limited to warehouses, distribution centers, hubs, fulfillment centers, nodes in a supply chain network, retail establishments, shipping facilities, stock storage facilities, or any other facility configured to process units of items. For example, this Figure may illustrate an order fulfillment center of a product distributor, according to some embodiments. Multiple customers 10 may submit orders 20 to the product distributor through an e-commerce portal or other electronic marketplace, where each order 20 specifies one or more items from inventory 30 to be shipped to the customer that submitted the order. To fulfill the customer orders 20, the one or more items specified in each order may be retrieved, or picked, from inventory 30 (which may also be referred to as stock storage) in the materials handling facility, as indicated at 40. Picked items may be delivered or conveyed, if necessary, to one or more stations in the materials handling facility for sorting 50 into their respective orders, packing 60, and finally shipping 70 to the customers 10. In various embodiments, picked items may be delivered to a station where individual units of items are associated with and placed into particular conveyance receptacles, which are then inducted into a conveyance mechanism. The conveyance receptacles may then be routed to particular destinations for the items contained within the receptacles in accordance with the requests (orders) currently being processed, e.g. to sorting stations, under direction of a control system (e.g., control system 102). A picked, packed and shipped order does not necessarily include all of the items ordered by the customer; an outgoing shipment to a customer may include only a subset of the ordered items available to ship at one time from an inventory storage location.

A materials handling facility may also include a receiving 80 operation for receiving shipments of stock (e.g., units of inventory items) from one or more sources (e.g., vendors) and for moving or "stowing" the received stock into stock storage (e.g., inventory 30). The receiving 80 operation may also receive and process returned purchased or rented items or orders from customers. At least some of these items are typically returned to inventory 30. The various operations of a materials handling facility may be located in one building or facility, or alternatively may be spread or subdivided across two or more buildings or facilities. In various instances, it should be understood that references to elements, units, items, processes (or anything else) as being located within materials handling facility 100 may easily be extended to encompass elements, units, items, processes (or anything else) proximate to but not physically located within materials handling facility. For example, various elements, units, items, or processes (or anything else) may be implemented outside of the materials handling facility, according to some embodiments.

In various embodiments, shipments of one or more items at shipping 70 may be transferred to one or more shipment carrier network(s) 75. Each shipment carrier's network may include one or more distribution facilities for storing items as well as vehicles for conveying shipments from such distribution facilities and/or materials handling facilities (such as materials handling facility 100) to various destinations (e.g., customer specified destinations).

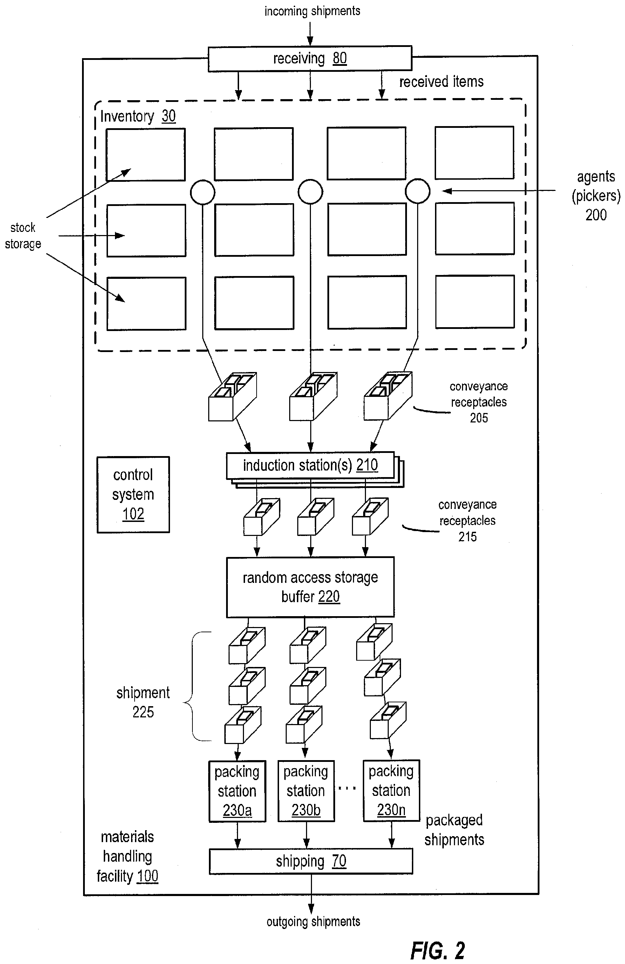

Figure 2 illustrates an exemplary physical layout of a materials handling facility, such as an order fulfillment facility or center, in which embodiments of the system and method for managing shipment release from a storage area in a materials handling facility are implemented. Requests (e.g., orders) for items from requestors may be divided among multiple pickers 200, who then pick items from inventory storage 30. Picked units of items may be placed into conveyance receptacles 205 (e.g., totes or carts) for conveyance. The orders may be subdivided among the pickers 200; therefore, two or more of the pickers 200 may pick items for one order. The picked items may be conveyed to an induction station 210 or stations (there may be more than one induction station 210). For example, the picked items in conveyance receptacles 205 (e.g., totes) each containing one or more units of items (each possibly containing items from two or more orders) may be conveyed to any of inductions stations 210 on a conveyance device (e.g., a conveyor belt).

At the induction station 210, each unit may be pulled individually from each conveyance receptacle 205. Alternatively, all items may be "dumped" into a common receptacle (a bin, basket, shelf, etc.), and individual units may then be pulled from the common receptacle. In various embodiments, each pulled unit is then placed into a conveyance receptacle 215 (e.g., a tote or tray) by itself. This process may be referred to as singulating the item. Receptacles, as used herein, may include, but are not limited to, any tote, basket, box, tray, or similar mechanism configured to receive individual units of items or groups of units of items in a materials handling facility. The conveyance receptacle 215 need not be fixed to any conveyance mechanism.

The pulled unit of an item may be associated with the particular conveyance receptacle 215 it is placed in. In one embodiment, the association of a unit of an item with a particular conveyance receptacle 215 may be performed by reading, scanning or otherwise entering an item identifier associated with the item and a conveyance receptacle identifier associated with the particular conveyance receptacle 215 into which the unit is placed. The item identifier and receptacle identifier may be communicated to a control system 102 of the materials handling facility via wired and/or wireless communications. Each conveyance receptacle 215 may include a unique conveyance receptacle identifier that uniquely identifies the particular conveyance receptacle 215 in the materials handling facility. The conveyance receptacle identifier may, for example, be indicated by a bar code, Radio Frequency Identifier (RFID) device, or some other scannable or readable mechanism, mark, or tag attached to or integrated with the conveyance receptacle 215.

Each unit of each item carried in inventory 30 may include an item identifier. A type of item held in inventory 30 may be referred to herein as simply an item. The term item identifier may refer to a unique identifier associated with each particular type of item carried in inventory 30 of a distribution system. The term unit may be used to refer to one (unit) of a type of item. Typically, but not necessarily, each unit is tagged or otherwise marked with the item identifier. For example, units or collections of items in inventory may be marked or tagged with a bar code, Universal Product Code (UPC), Stock-Keeping Unit (SKU) code, serial number, and/or other designation (including proprietary designations) that may be used as item identifiers to facilitate materials handling facility operations, including, but not limited to, stowing, rebinning, picking, sorting, packing and shipping. These designations, or codes, may identify items by type, and/or may identify individual units within a type of item.

Cases, boxes, bundles, or other collections of units of items may similarly be marked or tagged with item identifiers. The units of items in a collection may all be of the same type of item, for example a case of twelve units of a particular item, or may be a collection of one or more units of each of two or more heterogeneous items. A collection of units of item(s) (e.g., a case containing twelve units of an item, or a bundle containing one or more units of each of two or more heterogeneous items, such as a boxed or bundled set of three different books) may thus be considered or treated as a "unit" in the order fulfillment process. A designation, or code, may thus also identify a collection of units of item(s) as a "unit" in the order fulfillment process. Thus, various, in addition to sorting individual units of items, may also process collections of units of item(s) designated as units. Therefore, the conveyance receptacles described herein may receive collections of units of item(s) that are designated as units as well as individual units of items.

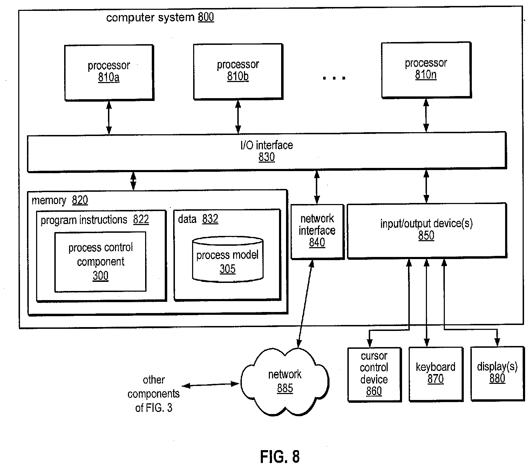

A materials handling facility may include a control system 102 which may include, but is not limited to, one or more computer systems, one or more data storage devices, one or more wired and/or wireless networks, control system software (programs, modules, drivers, user interfaces, etc.), and one or more hand-held, mobile and/or fixed readers, scanners or scanning devices that may be able to scan, receive, or otherwise detect the marks or tags (e.g., bar codes, radio frequency identification (RFID) tags, etc.) on individual items (units) or collections of items (e.g., cases) and communicate with a control station or stations of the control system to, for example, determine and record the item and/or item type of the items. The hand-held, mobile and/or fixed readers, scanners or scanning devices may also be able to scan, receive, or otherwise detect the marks or tags (e.g., bar codes, radio frequency identification (RFID) tags, etc.) attached to or integrated with the conveyance receptacles. An exemplary computer system that may be used in a control system 102 is illustrated in Figure 8.

At the induction station 210, a pulled unit of an item may be associated with a particular conveyance receptacle 215 by reading, scanning, etc. the item identifier associated with the item and the conveyance receptacle identifier associated with the conveyance receptacle 215 into the control system 102. This may be performed manually (e.g., by an operator or agent using a hand-held scanner), via an automated scanning/reading process using fixed scanners/readers, or by a combination of manual and automatic scanning/reading. For example, an operator at the induction station 210 may use a hand-held scanner to scan a code off the unit of the item before or during placement of the unit into a "staged" conveyance receptacle 215, while an automated reader may read (or may have already read) the conveyance receptacle identifier from the conveyance receptacle 215 that is "staged" for the operator to place the unit of the item into.

Once a pulled unit of an item is associated with and placed into a particular conveyance receptacle 215, the conveyance receptacle 215 may be inducted into a conveyance mechanism (e.g., a conveyor belt, roller system, or other conveyance mechanism) to be conveyed to random access storage buffer 220. In various embodiments, the conveyance mechanism may include a mechanism that includes some method of diverting a product off a conveyance path under control of the control system. Examples of such diversion mechanisms may include, but are not limited to, sliding shoe sorter mechanisms and pop up diversion mechanisms, such as pop up wheel sorter mechanisms. A pop up wheel sorter includes powered wheels that rise up out of the conveyor to divert product off the conveyor onto a different path or to a location. Other types of mechanisms may be used in various embodiments.

The conveyance receptacle 215 may already be on the conveyance mechanism when the unit is associated with and placed into the receptacle 215. Alternatively, a conveyance receptacle 215 may be retrieved from a conveyance receptacle storage, stack, or other supply, the unit may be associated with and placed into the receptacle 215, and the receptacle 215 may then be inducted into or placed on the conveyance mechanism. The conveyance receptacles 215 need not be fixed to the conveyance mechanism; instead, the receptacles 215 may be removable bins, trays, totes, or similar devices. The conveyance mechanism may be coupled to and controlled by the materials handling facility control system 102 via wired and/or wireless communications. The control system 102 may receive input from and send commands to the conveyance mechanism to direct or control various operations of the conveyance mechanism.

The above describes aspects of an induction station 210 in which a human operator performs at least a portion of the pulling of units of items from groups of picked items, scanning/reading the items and receptacles 215 to associate single units of items to particular conveyance receptacles 215, and placing the units into the conveyance receptacles 215. In alternative embodiments, some or all of the activities described as being performed by a human operator may be performed by automated mechanisms, which may be coupled to and under control of the materials handling facility control system 102.

Inducted items stored in conveyance receptacles 215 may be delivered to a random access storage buffer 220. Random access storage buffer 220 may in various embodiments be configured to store multiple conveyance receptacles (each including a unit of an item) in respective buffer locations. In some embodiments, random access storage buffer 220 may include shelving units or other physical structures with columns and rows defining addressable locations or "slots" in which one or more conveyance receptacles 215 may be stored. In some embodiments, random access storage buffer may include automated or robotic mechanisms (e.g., multi-directional lifts or elevators) that may acquire an inducted conveyance receptacle 215 and place such receptacle into a respective addressable location of the random access storage buffer. Similar mechanisms may be utilized to remove conveyance receptacles (each including an item) from random access storage buffer 220. In various embodiments, random access storage buffer may be a two-sided structure such that conveyance receptacles may be placed into addressable locations of the buffer from one side of the buffer (e.g., an ingress side) and removed from another side of the buffer (e.g., an egress side).

Note that a conveyance receptacle including an item may be stored within random access storage buffer 220 for varying quantities of time (e.g., relatively short or relatively long periods of time). In some cases, conveyance receptacles that include units of the same shipment may arrive at the random access storage buffer at different times (e.g., due to picking variabilities). In some embodiments, conveyance receptacles including such units (typically one unit per receptacle) may not be eligible to be removed or "released" from the random access storage buffer until all of such units are present within the buffer. Shipments eligible for release may be removed from random access storage buffer 220 when directed by a computer system managing the buffer.

In various embodiments, random access storage buffer 220 may be controlled by control system 102 or by a dedicated buffer management component. In various embodiments, the buffer management component may control any and/or all aspects of the random access storage buffer 220, including but not limited to the physical mechanisms (e.g., robotic arms, lifts, elevators, etc.) that control the ingress and egress of conveyance receptacles 215 into and out of random access storage buffer 220. One example of such a buffer management component is described below with respect to the buffer management component.

In various embodiments, units may be released from random access storage buffer 220 and provided to a respective one of packing stations 230a-230n (collectively referred to as packing stations 230) on a per shipment basis. For instance, the conveyance receptacles including units that makeup shipment 225 may be released from random access storage buffer 220 and provided to packing station 230a. In various embodiments, each packing station may be configured to request one or more shipments depending on a measure of that packing stations current workload.

At each packing station, shipments of items (e.g., shipment 225) may be packed into a respective shipping container (e.g., corrugated box or other shipping container) for shipment from the materials handling facility. Prepared shipments may be processed at shipping 70 and conveyed to a shipment carrier for delivery to respective customers.

The illustrated materials handling facility also includes multiple unit handling processes. Generally, any process that moves a unit from a location within the materials handling facility to another location may be considered a unit handling process. For example, picking units of items from inventory 30 to conveyance receptacles 205 may be a unit handling process. The movement of conveyance receptacles 205 to induction stations 210 may also be a unit handling process. Likewise the conveyance of receptacles 215 from inductions stations 210 to random access storage buffer 220 may be a unit handling process. The release of shipments from random access storage buffer 220 to packing stations 230 may also be a unit handling process. In various embodiments, each of these unit handling processes may have a respective throughput rate (e.g., units per hour).

Various embodiments of the system and method for managing shipment release from a storage area in a materials handling facility may control one or more of the unit handling processes to efficiently utilize resources of the materials handling facility without exceeding known constraints of the materials handling facility. This may in some cases include managing the throughput rate of one or more of the unit handling processes. Examples of constraints may include the unit capacity of induction stations 210 or random access storage buffer 220, for example.

Embodiments may include elements for managing the release of shipments from a storage area (e.g., random access storage buffer 220) to one or more packing stations (e.g., packing stations 230). This process may include, for a given packing station that needs work, selecting a shipment to release from the random access storage buffer 220. For instance, a priority ranking of shipments eligible to be released may be generated. The shipment (e.g., a group of units belonging to the same shipment) that is ranked highest in this priority ranking may be selected for release to the packing station. This priority ranking may be generated based on a variety of criteria, such as an expected shipping deadline for a shipment. This process is described in more detail below with respect to subsequent figures. Embodiments may also include elements for controlling the order in which units of a given shipment are released and/or arrive at a respective packing station. (Note that, due to the manner in which buffer 220 handles units in some embodiments, the order in which units are released from the random access storage buffer may be, but need not be, the same as the order in which those same units arrive at a respective packing station.) In various embodiments, this order may be based on the physical dimensions of the units within a shipment. For instance, in one embodiment, a footprint may be based on the two largest dimensions of each unit (e.g., the result of multiplying product length by product width). In this example, units may be provided to a packing station in a descending order based on footprint size (e.g., largest footprint unit is provided first, second-largest is provided second, and so on). Providing units to packing stations in this manner may accelerate the packing process, as described in more detail below.

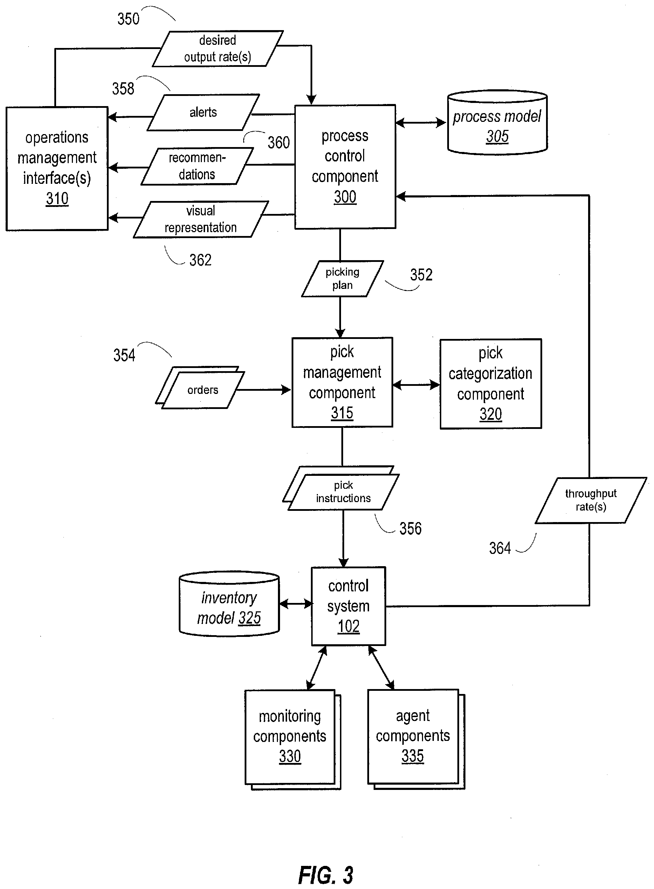

Figure 3 illustrates an example system for implementing embodiments of the system and method for process management in a materials handling facility. Embodiments may include a process control component 300 configured to control the various unit handling processes described above. In various embodiments, process control component 300 may be configured to generate a process model 305. Process model 305 may include a model of the unit handling process of materials handling facility 100. In various embodiments, for each unit handling process, process model may specify the current throughput (e.g., real-time or near real-time throughput) or historical throughput rates of that unit handling process. For instance, for a picking process, the process model may specify the quantity of units being picked per period of time (e.g., units picked per hour). In other examples, the process model may specify the units per hour conveyed to induction station 210, units per hour conveyed to random access storage buffer 220, and units per hour conveyed to pack stations 230. The process model 305 may also specify the output rate of packing stations 230.

For each of different collections of units within the materials handling facility 100, process model 305 may specify the quantity of units within such collection. For instance, collections of units may reside in between unit handling processes within the materials handling facility, such as the collection of units stored at inventory 30, induction station(s) 210, random access storage buffer 220, and packing stations 230. The process model 305 may also specify the specific units within each collection. For example, units may be associated with the conveyance receptacles in which they reside. Furthermore, each conveyance receptacle may be associated with a respective location of the materials handling facility (e.g., inventory 30, an indication station 210, random access storage buffer 220, a packing station 230). In this way, process model 305 may provide process control component 300 with a holistic view of the processes and units within the materials handling facilities. As described in more detail below, process control component 300 may evaluate process model 305 to control the flow of units within materials handling facility 100.

Process control component 300 may utilize process model 305 and desired output rates 350 to control the processing of units within the materials handling facility. In various embodiments, desired output rate(s) may specify one or more output rates desired for the packing stations of the materials handling facility. In various embodiments, a desired output rate may be received from an operations management interface 310. For instance, operations management interface 310 may be a computer system through which a management entity submits one or more desired output rates, which are then provided to the process control component. In various embodiments, different packing stations 210 may be associated with different packing station types; there may be a distinct desired output rate 350 for each packing station type. In some embodiments, different types of packing stations 210 may have different processing capabilities. For instance, one packing station may process only small shipments whereas other packing stations may process only medium or only large shipments. In some cases, some packing stations may process some combination of shipment types, such as a combination of small and medium or a combination of medium and large shipments.

In various embodiments, process control component 300 may control the unit handling processes of the materials handling facility by controlling at least a portion of the picking process of picking units of items into conveyance receptacles 205. In one embodiment, the desired output rate(s) 350 may be utilized to determine a collective output for upstream processes within the materials handling facility. For example, if the collective output rate specified by output rates 350 were 700 UPH (units per hour), the process control component may determine that target throughput rates for one or more upstream processes should also be 700 UPH. This calculation may trickle up to the picking process, which may also be assigned a target throughput rate of 700 UPH. The target throughput rate for the picking process may serve as a goal to be met by the agents that carry out picking. As described in more detail below, variabilities in picking and other unit handling processes may cause the process control component to adjust the target throughput rate over time.

To control the throughput of the unit handling processes, process control component 300 may be configured to generate a picking plan 352. Picking plan 352 may include one or more instructions to pick a particular throughput rate of units (e.g., a particular quantity of units per hour). This throughput rate may be the same as the target throughput rate determined by evaluating process model 305 and desired output rate(s) 350. In cases where packing stations 230 are not limited to packing a certain types of shipments (e.g., each pack station is capable of packing any type of shipment), picking plan 352 may specify one overall throughput rate for the picking unit handling process. In other cases, desired output rate(s) 350 may specify separate output rates for units of different types of shipments (e.g., small, medium, and large shipments, etc.). In these cases, picking plan 352 may specify picking throughput rates for each unit belonging to different size shipments. For instance, an example picking plan 352 may specify that 100 units of large shipments are to be picked per hour, 200 units of medium shipments are to be picked per hour, and 400 units of small shipment are to be picked per hour. Of course, other shipment size granularities may be utilized in other embodiments (e.g., extra-small, extra-large, etc.). In various embodiments, these shipment types may generally correspond to the volumetric displacement of a shipment and not necessarily the size of the units themselves. For instance, a large shipment may be comprised of many small units or comprised of one large unit. As described in more detail below, embodiments may include a pick categorization component 320 configured to, for a given unit to be picked, provide the shipment type (e.g., small, medium, large, etc.) of the shipment to which the given unit belongs.

Pick management component 315 may be configured to generate pick instructions 356 in accordance with picking plan 352. Pick instructions 356 may include instructions that are sent to agents 200 that pick units out of inventory 30 into conveyance receptacles 205. In one example, a pick instruction 356 may specify a unit of a particular item is to be picked from a particular inventory location of inventory 30.

Pick management component 315 may be configured to generate pick instructions 356 for shipments of various orders 354. For each shipment of an order 354 (some orders may be divided into multiple shipments), pick management component 315 may be configured to query pick categorization component 320 for the shipment type of that shipment. The pick management component 315 may utilize such information to provide the appropriate quantity of pick instructions for each shipment type. In one non-limiting example, as described above, picking plan 352 may specify that 100 units of large shipments are to be picked per hour, 200 units of medium shipments are to be picked per hour, and 400 units of small shipment are to be picked per hour. Pick management component 315 may utilize the pick categorization component results to provide the appropriate quantity of picking instructions for each type of shipment of the picking plan. In this example, based on the results provided by pick categorization component 320, pick management component 315 may provide 100 pick instructions for units belonging to large shipments, 200 pick instructions for units belonging to medium shipments, and 400 instructions for units belonging to small shipments.

In various embodiments, agent component(s) 335 may be mobile communication devices or other electronic devices that may be associated with agents performing work within the materials handling facility. In some embodiments, an agent component 335 may be implemented by a computer system, such as that of Figure 8 described below. In various embodiments, agent components 335 may be mobile or handheld devices that are carried by agents within the materials handling facility. Agent components 335 may communicate with control system 102 to send and receive information or commands, such as the location of units handled by the agent. For instance, in various embodiments, units within the materials handling facility may include or may be labeled with one or more identifiers (e.g., barcodes, stock keeping units or "SKUs", etc.). These identifiers may be specific to a particular item type (e.g., a particular model of a television) or specific to a particular unit of that item type (e.g., a particular unit of that television). Agent components may be configured to read (or "scan") these identifiers utilizing various components including but not limited to optical scanners (e.g., to scan barcode identifiers) or radio frequency identifier (RFID) scanners.

In various embodiments, control system 102 (including process control component 100) may track inventory based on input from one or more of agent component(s) 335. For instance, as agents move units from one location to another location (during receiving, picking, or some other operation), such movements may be recorded with agent components 335 utilized by the agents. For instance, as an agent moves an item from a first location to a second location, an agent may scan the item out of the first location by scanning the first location and the unit and/or may scan the item into the second location by scanning the second location and the unit. Such scanning may include electronically obtaining an identifier for the unit and the location from where the unit is being taken or the location to which the unit is being moved. (In some cases, the location from which a unit is removed need not be scanned. Instead, the control system may determine or infer the location from which a unit is removed based on the unit's last known location as recorded by the control system in inventory model 325.) For example, such scanning may include obtaining an identifier via an optical scanner (e.g., bar code scanner) or RFID scanner. In response, the control system may generate a stored data record (e.g., a record in inventory model 325) indicating the unit has left the corresponding location. A similar process may be performed when placing the unit at its new location. For example, an agent may scan an item and scan the location to which that item is being placed (e.g., a particular conveyance receptacle). In a similar manner as that described above, the control system may generate a stored data record indicating the unit has arrived at the new location. In this manner, control system 102 may in various embodiments track the location of a given unit throughout that unit's entire lifecycle in the materials handling facility (e.g., from receiving 80 to shipping 70). In some cases, the above-described tracking of units may be performed by an inventory management component, which may be a component of control system 102 or a separate component configured to communicate with control system 102.

In some cases, control system 102 may utilize automated devices or systems to track inventory within the materials handling facility. These elements are illustrated as monitoring components 330. For instance, as units move from one location to another within the materials handling facility (e.g., on a conveyance mechanism or cart), monitoring components, such as optical or RFID scanners controlled by a computer system, may electronically obtain identifiers of units during such movement (e.g., by scanning an optical identifier or RFID tag). Such information may be collected by control system 102 and/or an inventory management component in order to track inventory units within the materials handling facility.

The location of a given unit (e.g., an inventory location, conveyance receptacle, or another location of the materials handling facility) may be recorded in inventory model 325. This model may be updated in a real-time or near real-time fashion. In some embodiments, process control component 300 may generate process model 305 at least in part on inventory model 325. For instance, as unit handling processes process units, such units may be moved from location to another within the materials handling facility (e.g., from inventory to conveyance receptacles, from conveyance receptacles to induction stations, from induction stations to the random access storage buffer, from the random access storage buffer 220 to packing stations, etc.). This movement of units may be tracked in inventory model 325; process control component 300 may generate process model 305 based on the inventory model.

Pick instructions 356 may be provided to control system 102, which may be routed to respective agent components 335. Agents 200 may pick units into conveyance receptacles 205 in accordance with such pick instructions. From this point, conveyance receptacles may be conveyed to induction stations 210 and processed according to the description of Figure 2. By providing picking plan 352, which specifies one or more target throughput rates for picking, to pick management component 325, process control component 300 may control the throughput rate of the picking process. As described in more detail below, the actual throughput rate of the picking process (as well as subsequent processes) may be less than or greater than the target throughput rate specified by the process control component. This may occur due to variabilities within the materials handling facility, such as agents working slower or faster than expected. Other variabilities may be caused by the temporary slowdown or closure of induction stations or packing stations, for example. In some cases, a processing slowdown in one unit handling process may trickle up to one or more upstream processes. The current state of each unit handling process may be reflected in process model 305 on a real-time or near real-time basis. Likewise, process control component 300 may monitor the state of each unit handling process by monitoring process model 305 on a real-time or near real-time basis.

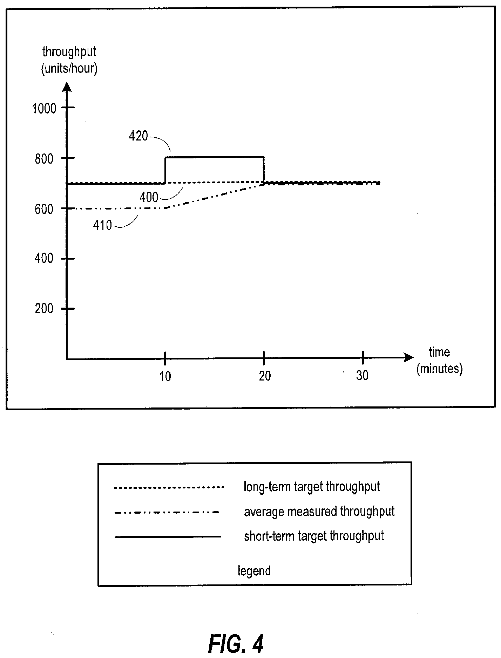

As described above, process control component 300 may, via picking plan 352, provide a target throughput rate for the picking process performed in the materials handling facility. In various embodiments, variabilities within the materials handling facility may cause the actual throughput rate of the picking process to deviate from the target throughput rate. Process control component 300 may be configured to detect such deviation and temporarily alter the target throughput rate in order to bring the average throughput rate of the picking process closer to the original target throughput rate. This process is described in more detail with respect to Figure 4 below.

Figure 4 illustrates an example plot of throughput rates of a picking process in the materials handling facility (e.g., the process of picking units from inventory 30 into conveyance receptacles 205). In the illustrated embodiment, line 400 represents a long-term target throughput rate for the picking process. In various embodiments, this may be the target throughput rate described above as being determined based on the target output rate of the packing process and the constraints of the materials handling facility (e.g., some items, such as the random access storage buffer may have a fixed capacity). The process control component may be configured to determine that the measured throughput rate of the picking process deviates from the long-term target throughput rate in a first time period. For instance, the measured target throughput rate during the first time interval of Figure 4 (i.e., 0 < time < 10 minutes) may be 600 units per hour whereas the long-term target throughput rate is 700 units per hour. This deviation may be caused by variabilities within the materials handling facility, such as staffing levels or agent performance.

As illustrated by line 410, the measured throughput rate of the picking process is illustrated as a running average. The process control component may correct the measured throughput rate of the picking process by temporarily using a short-term target throughput rate chosen to bring the measured throughput in line with the long-term target throughput rate. In various embodiments, the throughput rate of the picking process (or any other unit handling process of the materials handling facility) may be measured by control system 102 (e.g., based on input from the illustrated monitoring or agent components and/or based on inventory model 325) and provided to process control component 300 as illustrated by throughput rate(s) 364. Process control component 300 may utilize this feedback information to update picking plan 352 (or generate a new picking plan). For instance, in the illustrated embodiment, since the throughput of the picking process (e.g., as specified by throughput rates 364) is 100 units per hour less than the long-term target throughput rate, the short term target throughput rate 420 is chosen to be 100 units per hour more than the long-term target throughput rate such that the projected average throughput will converge to 700 units per hour. To control the picking process in this manner, the process control component may issue a new picking plan 352 valid for a temporary time period (e.g., 10 < time < 20 minutes). The picking plan may indicate the short-term throughput rate to be utilized during this time period.

In the illustrated embodiment, in response to the short-term target throughput rate, the throughput rate of the picking process may temporarily exceed the long-term target throughput rate. As illustrated by line 410, this may improve the average measured throughput of the picking process such that the average throughput converges to the long-term target throughput rate (at time = 20 minutes). While this convergence is illustrated as a linear change in average measured throughput, such change need not be linear in all cases. For instance, in other cases, this change may be approximated by an exponential decay or some other form. At this point, the target throughput rate may be returned to the long-term value (e.g., 700 units per hour). Should future variabilities cause the measured throughput to deviate from the long-term target throughput rate, the above described process may be performed one or more times.

In various embodiments, the units of the materials handling facility may be categorized into different collections of units based on physical location. The process model described above may include a stored representation of each collection of units and the composition of such collection (e.g., the type and quantity of units in the collection) on a real-time or near real-time basis. In various embodiments, the units of inventory 30 may belong to one collection, the units of conveyance receptacles 205 may belong to another collection of units, the units stored in the random access storage buffer may belong to yet another collection of units, and so on. In various embodiments, each unit handling process may move units of one collection of units to another collection of units. For instance, a picking process may move units from a collection of units in inventory to a collection of units formed by the contents of conveyance receptacles 205. In various embodiments, some collections of units may be limited in capacity. For instance, in some embodiments, the random access storage buffer 220 may have a fixed capacity. Accordingly, the collection of units stored in the random access storage buffer may also have a fixed capacity. Should this capacity be reached (i.e., should the buffer become full), this may in some cases negatively impact the throughput of the unit handling processes. For instance, if the random access storage buffer 220 were to become gridlocked, undesirable quantities of units could accumulate in one or more upstream processes. In various embodiments, process control component 300 may be configured to determine that a given collection of units has reached a threshold capacity and reduce one or more target throughput rates in order to alleviate the strain on that collection of units. For instance, in an example where the collection of units in the random access storage buffer reaches a threshold value of the buffer's capacity (e.g., 85% of the buffer's capacity), the process control component may reduce the target throughput rate of the picking process such that less units are sent to the random access storage buffer. In different cases, the updated target throughput rate may be valid indefinitely or for only a short time period.

Returning to Figure 3, in addition to generating an updated picking plan 352 as described with respect to Figure 4, the process control component may be configured to control the throughput rates of unit handling processes by generating alerts 358, recommendations 360, and a visual representation 362. Each of these elements may be provided to one or more operations management interfaces, such as operations management interface(s) 310. One example of an operations management interface may be a computer system or other electronic device configured to provide information to a management entity, such as by displaying information on a visual display or generating audible information through a speaker or other transducer.

In various embodiments, process control component 300 may be configured to monitor process model 305 to ensure that each process is meeting a minimum throughput rate. If a given unit handling process fails to meet such minimum throughput rate, the process control component may generate an alert, which may be provided to one or more of the management interfaces. In other cases, alerts may be generated in response to determining that an undesirable quantity of units have accumulated in an area of the materials handling facility. For instance, if a quantity of units stored within random access storage buffer 220 exceeds a maximum allowed threshold (e.g., 90% of the buffers capacity), the process control component may generate an alert to notify a management entity about the accumulation.

In addition to alerts or as an alternative to alerts, the process control component may be configured to generate one or recommendations 360, which may be provided to one or more of the management interfaces. Recommendations 360 may be triggered in a manner similar to the alerts described above; however, recommendations 360 may also specify one or more actions to take to alleviate problems within the materials handling facility. For instance, if a backup of units occurs or a unit handling process does not meet a required throughput, the recommendations may include solutions to alleviate those conditions, such as increasing staffing levels (e.g., increasing the quantity of agents) or temporarily reducing the quantity of items picked from inventory.

In various embodiments, process control component 300 may also be configured to generate a visual representation 362 of process model 305. One example of a visual representation 362 may be generated on an electronic display. The visual representation may convey information about the unit handling processes in a graphical manner. In one non-limiting, each unit handling process may be represented graphically with directional arrows indicating process flow. The visual representation may also include various metadata about the unit handling process represented in a graphical manner, such as text or colors that indicates flow rates of the various unit handling processes. In some cases, instead of or in addition to relying on alerts and/or recommendations, management entities may monitor visual representation 362 for problems or backups within the facility and take action as they see fit.

### Example Methods

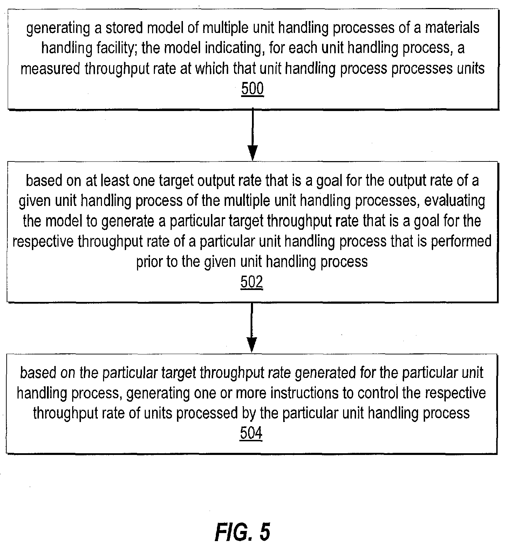

Embodiments of the system and method for process management in a materials handling facility may include various methods, such as those of Figures 5 - 7 described below. In various embodiments, these methods may be implemented on a computer system, such as that of Figure 8 described below. In various embodiments, the methods described herein may be performed by process control component 300 described above, which may also be implemented on a computer system, such as that of Figure 8 described below.

Figure 5 illustrates an example method for generating a model of the unit handling processes in the materials handling facility and utilizing that model to control the throughput of such processes. As illustrated by block 500, the method may include generating a stored model of multiple unit handling processes of a materials handling facility. Examples of such processes may include any of the unit handling process described above including but not limited to a picking process for picking units of items from inventory, a conveyance process for conveying units between locations of the materials handling facility, an induction process for singulating and moving items into a random access storage buffer including multiple unit locations, and a packing process for preparing shipments of units to be shipped from the materials handling facility. One example of such a model is described above with respect to process model 305.

In various embodiments, for each unit handling process modeled, the generated model may indicate real-time, near real-time and/or historical throughput rates for that unit handling process. In some cases, some unit handling process may be performed according to a particular order (e.g., picking is performed before induction, which is performed before packing, etc.). In various embodiments, the generated model may specify this order.

As illustrated by block 502, the method may include, based on at least one target output rate that is a goal for the output rate of a given unit handling process (e.g., a packing process) of the multiple unit handling processes, evaluating the model to generate a particular target throughput rate that is a goal for the respective throughput rate of a particular unit handling process (e.g., a picking process) that is performed prior to the given unit handling process. For example, as described above, a management entity may specify a target output rate for the packing process of the materials handling facility (e.g., 700 UPH). Based on this target output rate, the method may include determining the desired target throughput rate for one or more upstream processes all the way up to the picking process. In one embodiment, the target throughput rate of each unit handling process may be determined as being equivalent to the target output rate provided by a management entity. In other cases, the target throughput rate of one or more upstream processes may be different than the target output rate while still being derived from that target output rate.

As illustrated by block 504, the method may also include, based on the particular target throughput rate for the particular unit handling process (e.g., a target throughput rate for a picking process), generating one or more instructions to control the respective throughput rate of units processed by the particular unit handling process. One example of such instructions is described above with respect to picking plan 352, which may specify one or more target throughput rates for the picking process. In some cases, generating the instructions may include directly generating pick instructions, such as pick instructions 356 described above.

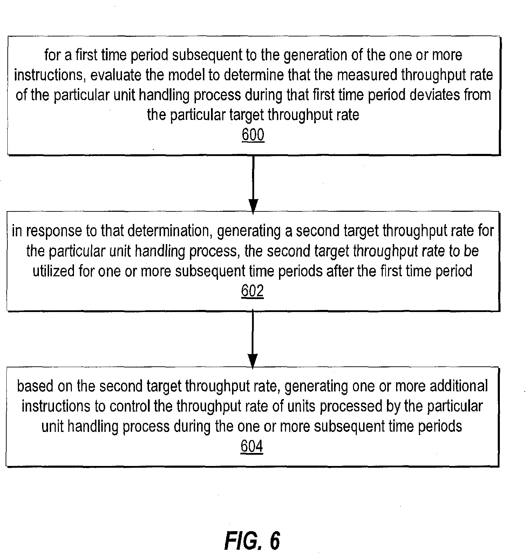

Figure 6 illustrates a flowchart of an example method for at least temporarily altering the target throughput rate of a unit handling process, such as illustrated by the short term target throughput rate of Figure 4 described above. In some embodiments, the illustrated method may be performed after the method described above with respect to Figure 5. As illustrated at 600, the method may include, for a first time period subsequent to the generation of the one or more instructions (e.g., the instructions described with respect to block 504), evaluating the model to determine that the measured throughput rate of a particular unit handling process (e.g., a picking process) during that first time period deviates from the particular target throughput rate for that unit handling process. One example of determining such a deviation is a determination that the measured throughput rate of a picking process is below (or above) the target throughput rate for the picking process. For instance, such a determination may include a process control component determining that the measured throughput of the picking process is 100 units per hour less than the target throughput rate, as described above with respect to the first time period (0 < time < 10 minutes) of Figure 4.

As illustrated by block 602, the method may also include, in response to the determination of block 600, generating a second target throughput rate for the particular unit handling process. This second target throughput rate may be utilized for one or more subsequent time periods, similar to the short-term target throughput rate described above with respect to Figure 4. For instance, the second target throughput rate may be used temporarily to overcome a transient condition within the materials handling, such as the measured throughput rate of a unit handling process deviating from a respective target throughput rate. An example of using a second target throughput rate in this manner is described above with respect to the second time period (10 < time < 20 minutes) of Figure 4.

As illustrated by block 604, the method may also include, based on the second target throughput rate, generating one or more additional instructions to control the throughput rate of units processed by the particular unit handling process during the one or more subsequent time periods. For example, this portion of the method may include temporarily altering a picking plan (e.g., picking plan 352) to reflect new instructions valid for the one or more subsequent time periods or generating a new picking plan altogether for the one or more or more subsequent time periods. In the example of Figure 4, controlling the picking process in this manner brings the average measured throughput rate up to the long-term target throughput rate, after which the use of the long-term target throughput rate for controlling the picking process may be resumed.

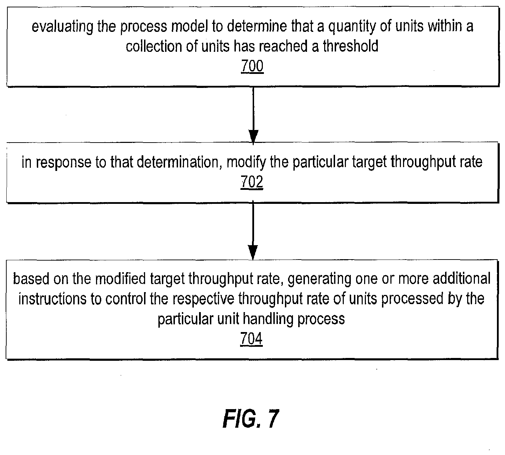

As described above, in various embodiments, the units of the materials handling facility may be categorized into different collections of units based on physical location. The process model described above may include a stored representation of each collection of units and the composition of such collection (e.g., the type and quantity of units in the collection) on a real-time or near real-time basis. In various embodiments, the units of inventory 30 may belong to one collection, the units of conveyance receptacles 205 may belong to another collection of units, the units stored in the random access storage buffer may belong to yet another collection of units, and so on. In various embodiments, each unit handling process may move units of one collection of units to another collection of units. For instance, a picking process may move units from a collection of units in inventory to a collection of units formed by the contents of conveyance receptacles 205. In various embodiments, some collections of units may be limited in capacity. For instance, in some embodiments, the random access storage buffer 220 may have a fixed capacity. Accordingly, the collection of units stored in the random access storage buffer may also have a fixed capacity. Should this capacity be reached (i.e., should the buffer become full), this may in some cases negatively impact the throughput of the unit handling processes. For instance, if the random access storage buffer 220 were to become gridlocked, undesirable quantities of units could accumulate in one or more upstream processes. Embodiments may include methods for avoiding such situations, such as the method of Figure 7 described below.

Figure 7 illustrates a flowchart of an example method for adjusting the target throughput rate in response to a threshold capacity of a collection of units being reached. As illustrated by block 700, the method may include evaluating the process model (e.g., process model 305) to determine that a quantity of units within a collection of units has reached a threshold. For instance, in an example where the collection of units is a collection of the units of the random access storage buffer, the method may include determining that the quantity of units in the random access storage buffer has reached a threshold level, such as 85% of buffer capacity (or some other threshold). In other examples, a lower-bound threshold may be utilized. For example, in some embodiments, the method may include evaluating the process model (e.g., process model 305) to determine that a quantity of units within the random access storage buffer is below 50% of the buffer's capacity.

As illustrated by block 702, the method may also include, in response to the determination of block 702, modifying the particular target throughput rate. For instance, the target throughput rate of the picking process may be reduced by 20% or some other amount in order to reduce strain on the random access storage buffer by reducing the quantity of units sent to the buffer. Of course, in other examples, the target throughput rate may be reduced by some other amount. In cases where a lower-bound threshold is utilized, modifying the target throughput rate may include increasing the particular target throughput rate.

As illustrated by block 704, the method may include, based on the modified target throughput rate, generating one or more additional instructions to control the respective throughput rate of units processed by the particular handling process. In an example where an upper-bound threshold is reached, this may include generating a new picking plan 352 that specifies the quantity of units to be picked during a given time period (e.g., the target throughput rate) should be reduced (or modifying the existing picking plan to indicate the target throughput rate reduction). In an example where a lower-bound threshold is reached, this may include generating a new picking plan 352 that specifies the quantity of units to be picked during a given time period (e.g., the target throughput rate) should be increased (or modifying the existing picking plan to indicate the target throughput increase). In various embodiments, the new target throughput rate could apply indefinitely (e.g., a long-term target throughput rate) or temporarily (e.g., a short-term target throughput rate).

While the method of Figure 7 primarily addresses situations in which a collection of units reaches an upper limit threshold, similar techniques could be applied to a collection of units reaching a lower limit threshold. In one example, in response to determining that the capacity of the random access storage buffer is underutilized, the method could include increasing the target throughput rate utilized for the picking process.

### Example Computer System

Various embodiments of the system and method for process management in a materials handling facility, as described herein, may be executed on one or more computer systems, which may interact with various other devices. Note that any component, action, or functionality described above with respect to Figures 1-7 may be implemented via one or more computer systems configured as computer system 800 of Figure 8, according to various embodiments. In the illustrated embodiment, computer system 800 includes one or more processors 810 coupled to a system memory 820 via an input/output (I/O) interface 830. Computer system 800 further includes a network interface 840 coupled to I/O interface 830, and one or more input/output devices 850, such as cursor control device 860, keyboard 870, and display(s) 880. In some cases, it is contemplated that embodiments may be implemented using a single instance of computer system 800, while in other embodiments multiple such systems, or multiple nodes making up computer system 800, may be configured to host different portions or instances of embodiments. For example, in one embodiment some elements may be implemented via one or more nodes of computer system 800 that are distinct from those nodes implementing other elements.

In various embodiments, computer system 800 may be a uniprocessor system including one processor 810, or a multiprocessor system including several processors 810 (e.g., two, four, eight, or another suitable number). Processors 810 may be any suitable processor capable of executing instructions. For example, in various embodiments processors 810 may be general-purpose or embedded processors implementing any of a variety of instruction set architectures (ISAs), such as the x86, PowerPC, SPARC, or MIPS ISAs, or any other suitable ISA. In multiprocessor systems, each of processors 810 may commonly, but not necessarily, implement the same ISA.

System memory 820 may be configured to store program instructions 822 and/or data 832 accessible by processor 810. In various embodiments, system memory 820 may be implemented using any suitable memory technology, such as static random access memory (SRAM), synchronous dynamic RAM (SDRAM), nonvolatile/Flash-type memory, or any other type of memory. In the illustrated embodiment, program instructions 822 implementing process control component 300 are shown stored within program instructions 822. Additionally, data 832 of memory 820 may store any of the information or data structures described above, such as process model 305. In some embodiments, program instructions and/or data may be received, sent or stored upon different types of computer-accessible media or on similar media separate from system memory 820 or computer system 800. While computer system 800 is described as implementing the functionality of process control component 300, any of the components or systems illustrated above may be implemented via such a computer system.

In one embodiment, I/O interface 830 may be configured to coordinate I/O traffic between processor 810, system memory 820, and any peripheral devices in the device, including network interface 840 or other peripheral interfaces, such as input/output devices 850. In some embodiments, I/O interface 830 may perform any necessary protocol, timing or other data transformations to convert data signals from one component (e.g., system memory 820) into a format suitable for use by another component (e.g., processor 810). In some embodiments, I/O interface 830 may include support for devices attached through various types of peripheral buses, such as a variant of the Peripheral Component Interconnect (PCI) bus standard or the Universal Serial Bus (USB) standard, for example. In some embodiments, the function of I/O interface 830 may be split into two or more separate components, such as a north bridge and a south bridge, for example. Also, in some embodiments some or all of the functionality of I/O interface 830, such as an interface to system memory 820, may be incorporated directly into processor 810.

Network interface 840 may be configured to allow data to be exchanged between computer system 800 and other devices (e.g., any other component of the Figures described above) attached to a network 885 (e.g., any element of Figure 3) or between nodes of computer system 800. Network 885 may in various embodiments include one or more networks including but not limited to Local Area Networks (LANs) (e.g., an Ethernet or corporate network), Wide Area Networks (WANs) (e.g., the Internet), wireless data networks, some other electronic data network, or some combination thereof. In various embodiments, network interface 840 may support communication via wired or wireless general data networks, such as any suitable type of Ethernet network, for example; via telecommunications/telephony networks such as analog voice networks or digital fiber communications networks; via storage area networks such as Fibre Channel SANs, or via any other suitable type of network and/or protocol.

Input/output devices 850 may, in some embodiments, include one or more display terminals, keyboards, keypads, touchpads, scanning devices, voice or optical recognition devices, or any other devices suitable for entering or accessing data by one or more computer systems 800. Multiple input/output devices 850 may be present in computer system 800 or may be distributed on various nodes of computer system 800. In some embodiments, similar input/output devices may be separate from computer system 800 and may interact with one or more nodes of computer system 800 through a wired or wireless connection, such as over network interface 840.

As shown in Figure 8, memory 820 may include program instructions 822 configured to implement any element or action described above. In one embodiment, the program instructions may implement the methods described above, such as the method illustrated by Figures 5-7. In other embodiments, different elements and data may be included. Note that data 832 may include any data or information described above.

Those skilled in the art will appreciate that computer system 800 is merely illustrative and is not intended to limit the scope of embodiments. In particular, the computer system and devices may include any combination of hardware or software that can perform the indicated functions, including computers, network devices, Internet appliances, PDAs, wireless phones, pagers, etc. Computer system 800 may also be connected to other devices that are not illustrated, or instead may operate as a stand-alone system. In addition, the functionality provided by the illustrated components may in some embodiments be combined in fewer components or distributed in additional components. Similarly, in some embodiments, the functionality of some of the illustrated components may not be provided and/or other additional functionality may be available.

Those skilled in the art will also appreciate that, while various items are illustrated as being stored in memory or on storage while being used, these items or portions of them may be transferred between memory and other storage devices for purposes of memory management and data integrity. Alternatively, in other embodiments some or all of the software components may execute in memory on another device and communicate with the illustrated computer system via inter-computer communication. Some or all of the system components or data structures may also be stored (e.g., as instructions or structured data) on a computer-accessible medium or a portable article to be read by an appropriate drive, various examples of which are described above. In some embodiments, instructions stored on a computer-accessible medium separate from computer system 800 may be transmitted to computer system 800 via transmission media or signals such as electrical, electromagnetic, or digital signals, conveyed via a communication medium such as a network and/or a wireless link. Various embodiments may further include receiving, sending or storing instructions and/or data implemented in accordance with the foregoing description upon a computer-accessible medium. Generally speaking, a computer-accessible medium may include a computer-readable storage medium or memory medium such as magnetic or optical media, e.g., disk or DVD/CD-ROM, volatile or non-volatile media such as RAM (e.g. SDRAM, DDR, RDRAM, SRAM, etc.), ROM, etc. In some embodiments, a computer-accessible medium may include transmission media or signals such as electrical, electromagnetic, or digital signals, conveyed via a communication medium such as network and/or a wireless link.

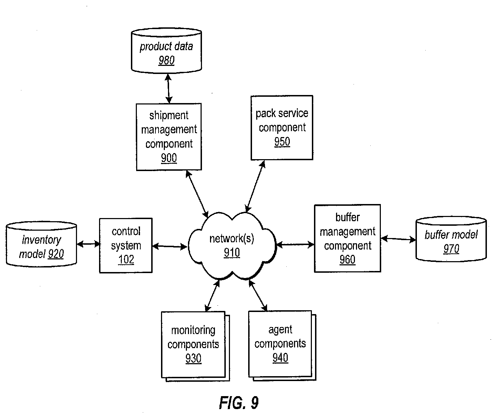

In various embodiments, the above-describe aspects of controlling the release of shipments as well as the order in which units of a given shipment are provided to a pack station may be controlled by a shipment management component. Figure 9 illustrates an example system configuration that includes such a shipment management component, which is illustrated as shipment management component 900. In the illustrated embodiment of Figure 9, any of the illustrated components may be implemented on one or more computer systems, such as the computer system of Figure 8. Additionally, any of the illustrated components may communicate over one or more network(s) 910, which may be configured similar to the network 885 of Figure 8.

Control system 102 may be the same as that illustrated in previous figures. In various embodiments, control system 102 may be configured to create, maintain, and/or update an inventory model 920. Inventory model 920 may indicate a real-time or near real-time representation of the location of inventory units with the materials handling facility. Note that the location of a given unit need not be limited to inventory 30. For instance, the location of a unit could be a conveyance receptacle, the location of that conveyance receptacle within the materials handling facility, a conveyance system, random access storage buffer 220, or any other location of the materials handling facility. In various embodiments, as agents handle units throughout the materials handling facility, agent components 940 may scan items into and out of various locations. For instance, agent components 940 may be mobile and/or handheld devices utilized by agents to record the location of units during handling. The agent components may be configured with bar code or RFID scanners in order to read unit identifiers, conveyance receptacle identifiers, and/or location identifiers (e.g., an identifier of a location in inventory, a pack station, etc.). Unit identifiers and/or location identifiers may be sent from agent components 940 to control system 102. Control system 102 may store records that associate a unit with a respective location in inventory model 920. Monitoring components 930 may provide similar information to control system 102. For example, monitoring components may be automated scanners or receivers that track the units within the materials handling facility, in some cases in an automated manner. For instance, monitoring components may represent optical scanners or RFID scanners that are strategically placed within the materials handling facility. The control system may be configured to update the inventory model 920 based on information received from such monitoring components, according to various embodiments.

As described above, shipment management component 900 may be configured to, for a given packing station that needs work, select a shipment to release from the random access storage buffer 220, which may be based on a priority ranking of shipments eligible to be released to that pack station. In various embodiments, shipment management component 900 may also be configured to, for a given shipment that is released, control the order in which the units of that shipment are provided to the respective packing station. In various embodiments, this order may be based on various criteria, such as the physical dimensions of a unit. Product data 980 may, for any unit of the materials handling facility, store corresponding product data that may include but is not limited to dimension information of a unit (e.g., length, width, depth), weight of a unit, measures of fragility (e.g., very fragile, slightly fragile, not fragile, durable, etc.) or any other information pertaining to the units within the materials handling facility. This information may be utilized by shipment management component 900 to generate the order according to which a shipment is provided to a respective pack station.

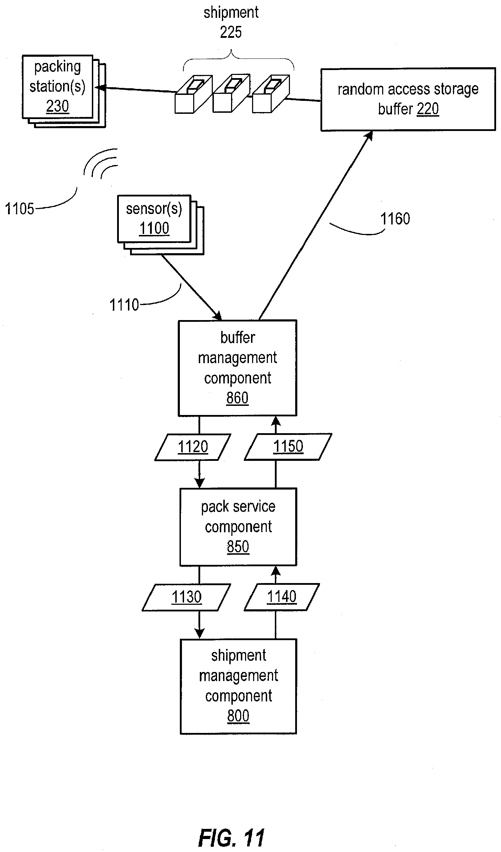

Embodiments may also include a pack service component 950. Pack service component 950 may maintain records of pack station packing capabilities (or simply "capabilities") and provide this information to other components (e.g., shipment management component 900) when needed. As described in more detail below, when shipment management component 900 is determining which shipments to release from buffer 220 to a particular pack station, pack service component 950 may provide the shipment management component with information that specifies the capabilities of that pack station. For example, in some embodiments, different types of packing stations 230 may have different processing capabilities. For instance, one packing station may process only small shipments whereas other packing stations may process only medium or only large shipments. In some cases, some packing stations may process some combination of shipment types, such as a combination of small and medium or a combination of medium and large shipments. Of course, other shipment size granularities may be specified in other embodiments (e.g., extra-small, extra-large, etc.). In various embodiments, these shipment types may generally correspond to the volumetric displacement of a shipment (e.g., a collection of units) and not necessarily the size of the units individually. For instance, a large shipment may be comprised of many small units or comprised of one large unit. Shipment management component 900 may utilize the above-described information to constrain the universe or domain of shipments being considered for release. This process is described in more detail below with respect to Figure 11.

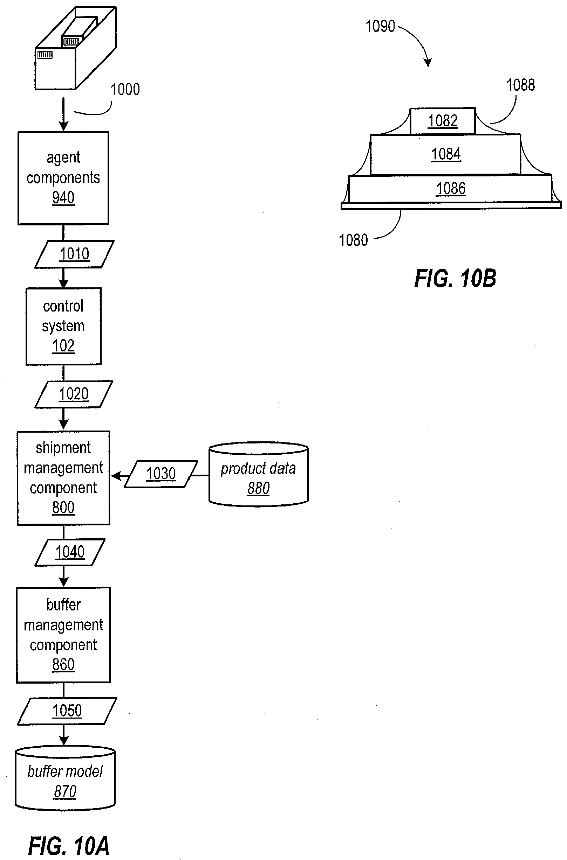

Buffer management component 960 may be configured to control random access storage buffer 220. In various embodiments, buffer management component 960 may control any and/or all aspects of the random access storage buffer 220, including but not limited to the physical mechanisms (e.g., robotic arms, lifts, elevators, etc.) that control the ingress and egress of conveyance receptacles 215 (including respective units) into and out of random access storage buffer 220. Buffer management component 960 may also be configured to generate, maintain and/or update a buffer model 970. In various embodiments, buffer model 970 may be configured to specify information that indicates, for each receptacle received by the random access storage buffer, the location of that receptacle as well as various metadata about the receptacle. In various embodiments, this metadata may specify a shipment identifier (or simply "shipment ID") of the shipment to which the conveyance receptacle is associated. For instance, for a shipment of three units stored in the random access storage buffer, each respective conveyance receptacle (e.g., tray) storing one of such units may be associated together by a common shipment identifier in the buffer model 970. In this way, when shipment management component sends a shipment release request (specifying a shipment ID) to buffer management component 960, buffer management component may evaluate the metadata to determine the trays that are associated with that shipment ID and release those trays. In various embodiments, for a given shipment ID, buffer model 970 may also specify the order in which those trays are to be provided to a pack station. As described in more detail with respect to Figure 10A, this order may be generated and provided by shipment management component 900. In various embodiments, this may occur at the time of unit induction into the random access storage buffer.

Figure 10A illustrates a data flow diagram of an example process for determining an order according to which units of a particular shipment are to be released. This order may be referred to herein as a "release order" but generally refers to the order according to which units of a shipment are to be provided to a pack station. At 1000 of the illustrated embodiment, a unit in a conveyance receptacle (e.g.., a conveyance receptacle 215) may be inducted into random access storage buffer 220. At this time, an agent component 940 (or alternatively a monitoring component 930) may scan the identifier of the unit and the conveyance receptacle in which the unit is located. These identifiers may be provided to control system 102, as illustrated by data 1010. At 1020, shipment management component 900 may be notified that the unit/receptacle pair have been inducted (or are being inducted). If the unit is a part of a multiunit shipment for which other units have already been inducted or will be inducted, shipment management component may be configured to generate a release order for that shipment.

In various embodiments, the shipment management component may generate the release order based on one or more criteria related to physical characteristics of each unit. For example, in various embodiments, units with the largest footprint (relative to other units of the same shipment) may be the first to be provided to a pack station upon release of that shipment. In various embodiments, the footprint of a given unit may be the result of multiplying the largest dimension of the unit (e.g., the length of the unit) with the second largest dimension of the unit (e.g., the width of the unit). In various embodiments, the footprint may be generated according to other techniques and/or other criteria. In various embodiments, the criteria by which units of a shipment are evaluated to determine a release order may include but are not limited to the length of each respective unit, the width of each respective unit, the depth of each respective unit, the surface area of each respective unit, the volume of each respective unit, the weight of each respective unit, and/or a measure of fragility of each respective unit (e.g., less fragile units are provided to pack stations first). Any of this information may be stored within product data 980, which is accessible to shipment management component 900.

In one example, the shipment management component may, for each unit of a shipment, multiply the length of that unit by the width of that unit to determine a footprint value (e.g., an area). The shipment management component may be configured to generate the release order such that the order indicates the units of the shipment are to be provided to the respective packing station in order of descending footprint value (e.g., largest area provided first, second largest area provided second, and so on). In various embodiments, the length of a given unit may be the largest dimension of that unit relative to other dimensions of that unit. The width of a given unit may be the second largest dimension of that unit relative to other dimensions of that unit. In one non-limiting example, the length of a unit may be the largest dimension, the width may be the second largest dimension, and the depth may be the smallest dimension.

Referring collectively to Figures 4A and 4B, a shrink-wrapped "product unit" 1090 is provided for illustrative purposes. This product unit may be assembled at a pack station 230 and/or one or more subsequent stations (e.g., a shrink-wrapping station). In this figure, the product unit may be made up of three inventory units 1082, 1084 and 1086. As illustrated, unit 1086 may have the largest footprint of the three units, unit 1084 may have the second largest footprint of the three units, and unit 1082 may have the smallest footprint of the three units. In various embodiments, agents at pack stations 230 may take a bottom-up approach to preparing a product unit 1090. For instance, support member 1080 (e.g., a corrugated cardboard plane) may be positioned into place first. Next, item 1086 may be placed on top of the support member. Item 1084 may then be placed on top of item 1086. Item 1082 may then be placed on top of item 1084. This may be done by the agent or by an automated machine or mechanism. In various embodiments, the agent at the packing station or at some downstream station may wrap the support member and units positioned thereon in a plastic shrink-wrap 1088 or otherwise secure support member 1080 and units 1082-1086 together. By providing the illustrated units to the pack station according to a release order of largest footprint to smallest footprint (e.g., unit 1086, then unit 1084, then unit 1082), embodiments may alleviate pack station agents from the burden of rearranging the units into the appropriate order at packing time.

In various embodiments, any of the criteria described above may be utilized to generate the release order. For instance, in one embodiment, the shipment management component may bias the criteria such that heavier units are placed toward the bottom of a product unit 1090 (e.g., heavier units are provided to the pack station before lighter units). In another example, the shipment management component may bias the criteria such that less fragile units are placed toward the bottom of a product unit 1090 (e.g., units that are more durable arrive at the pack station before items that are less durable). In general, any of the criteria described above may be utilized to generate the release order. Any of the relevant product information for the above-described may be retrieved from product data 980, as illustrated by the retrieval of data 1030.

Shipment management component 900 may provide the generated release order and corresponding shipment ID to buffer management component 960 as illustrated by data 1040. Data 1040 may also specify the identifiers of the inducted conveyance receptacle and unit within that conveyance receptacle. The buffer management component 960 may store any of this information within buffer model 970, as illustrated by data 1050. In one example, for each unit inducted into random access storage buffer 220, buffer model 970 may specify the corresponding shipment ID and the order in which that unit is to be provided to a pack station at release time. For instance, in a shipment of three units, the unit with the largest footprint may be specified within the buffer model as "1st of 3." The shipment with the second largest footprint may be specified as "2nd of 3" and so on. In various embodiments, when a request to release a particular shipment is received by the buffer management component, as described below with respect to Figure 11, the shipment may be provided to the respective packing station according to the release order associated with the shipment ID of that shipment in buffer model 970.

In some embodiments, the release order described herein may be expressed as a ranking of units within a given shipment. The ranking may specify a release priority for each unit relative to other units of that shipment. In one non-limiting example, a unit with a release priority of "one" may be expected to be provided to a packing station before a unit with a release priority of "two." In some cases, the ranking of a given unit need not be unique with respect to the ranking of other units. For instance, multiple units may have the same ranking in some cases. In one non-limiting example, two equivalently ranked units may be provided to a pack station in any order with respect to each other as long as both units are provided to that pack station before other lower-ranked units of the same shipment.

Figure 11 illustrates an example process for determining that a pack station needs work items (e.g., shipments to pack), determining which work item(s) to provide to the pack station, and generating an instruction to provide the work item(s) to that pack station. As described in more detail below, the particular work item(s) chosen may be based on a variety of criteria.

In the illustrated embodiment, sensor(s) 1100 may monitor the workload of each packing station. For instance, each pack station may include a queue or buffer where units released from random access storage buffer 220 accumulate. As a pack station (and/or the agent at that pack station) performs work, units may be removed from that station's queue. Sensor(s) 1100 may monitor these queues as illustrated at 1105 to determine whether the quantity of work within a pack station's queue has fallen below a threshold quantity (e.g., below a certain number of units or shipments). In response to determining that a particular packing station's work queue has fallen below such a threshold, sensor(s) 1100 may generate a notification 1110 and provide such notification to buffer management component 960. In one non-limiting example, a given sensor 1100 may be a photo eye array.

In response to the notification 1110, buffer management component 960 may notify pack service component 950 that a particular pack station (e.g., as identified by a pack station identifier) needs work, as illustrated by data 1120. Pack service component 950 may determine the capabilities of that pack station. For example, as described above, different types of packing stations 230 may have different processing capabilities. For instance, one packing station may process only small shipments whereas other packing stations may process only medium or only large shipments. In various embodiments, pack service component 950 may generate and/or maintain a data store that includes records specifying the capabilities of each pack station 230. The pack service component may lookup a given pack station's capabilities from such a data store. Pack service component 950 may provide the identifier of the pack station that needs work as well as the capabilities of that pack station to shipment management component 900. In one non-limiting example, data 1130 may specify an identifier of the pack station that needs work as well as an indication that specifies that pack station is capable of processing small and medium sized shipments (but not large shipments). Of course, in other examples, a pack station may have different capabilities.

In some embodiments, packing stations may have primary and secondary (or additional) packing station capabilities. For example, the primary packing station capability of a given packing station may include only large shipments. However, as a secondary packing capability, that same packing station may be additionally capable of processing medium shipments. In some embodiments, primary packing station capabilities may be preferred over secondary packing station capabilities. For example, due to configuration or personnel, a given packing station may be better suited to pack shipments of one type even though that packing station is capable of processing shipments of other types.

Shipment management component 900 may be configured to determine which shipment is to be released from random access storage buffer 220 and provide the identifier of that shipment to pack service component 950 as data 1140. In various embodiments, shipment management component may determine a universe or domain of multiple shipments to evaluate; the shipment to release may be selected from this domain. For instance, in one non-limiting example, shipment management component 900 may constrain its analysis to shipments that are complete. In various embodiments, a complete shipment may be a shipment for which all units are present within the random access storage buffer 220. For example, the shipment management component may exclude shipments that are only partially complete, such as a shipment that has only some units present within random access storage buffer 220 (e.g., other units may still be in the picking process or otherwise have yet to be inducted into the buffer). In various embodiments, the universe or domain of complete shipments may be determined by shipment management component 900 by receiving such information from buffer management component 960 (e.g., the buffer contents can be determined from buffer model 970) and/or by receiving such information from control system 102 (e.g., the buffer contents may be determined from inventory model 920). In other embodiments, the shipment management component 900 may utilize other techniques for determining a list of shipments that are complete within random access storage buffer 220.

After determining the domain of shipments that are complete within random access storage buffer 220, shipment management component 900 may in some embodiments constrain the domain of shipments by eliminating some shipments from consideration on the basis of packing station capabilities. As described above, different packing stations 230 may have different capabilities. For instance, a packing station configured to process only small and medium shipments may not be configured to process large shipments. Shipment management component 900 may compare the shipments of the domain to the capabilities specified by data 1130 and eliminate shipments that are not compatible with the specified capabilities. In one non-limiting example, the packing station specified by data 1130 is capable of processing small and medium shipments, but not large shipments. In this example, shipment management component 900 may determine the shipment size for each shipment, which may be specified by pack service component 950, specified by some other component of the system, or inferred from product data 980, according to various embodiments. In this example, shipment management component 900 may then remove all shipments from the domain that do not have a size of small or medium (e.g., all large shipments are removed from consideration). The process described above may be referred to as reducing the domain.

As described above, in some cases, a packing station may have primary and secondary (or additional) packing capabilities. In the event that shipment management component 900 determines that no complete shipment is compatible with the primary packing capability of the packing station being evaluated, the shipment management component may identify completed shipments that are compatible with the secondary packing capability of that packing station. Consider an example where the packing station's primary capability is the packing of large shipments and the packing station's secondary capability is the packing of medium shipments. In this non-limiting example, if the completed shipments that are available do not include a large shipment, the shipment management component may identify completed medium shipments as being shipments eligible for consideration. In this way, the shipment management component may ensure that packing stations do not remain idle when shipments of their primary compatibility are not available. In various embodiments, this technique may improve the throughput of the overall packing process by increasing overall packing station utilization.

After reducing the domain of shipments being evaluated, the shipment management component may order or rank the remaining shipments of the domain according to one or more criteria. In various embodiments, the highest ranked shipment may be selected to be released from the random access storage buffer and provided to the respective pack station that needs work.

In some embodiments, the shipment management components may rank each shipment of the domain according to that shipment's expected shipping deadline, which may be the date and/or time at which that shipment is expected to be prepared for shipment from the materials handling facility. The shipment management components may generate the ranking such that shipments having a deadline closer to the current time are ranked higher than shipments having a deadline further away from the current time.

In some embodiments, the shipment management components may rank each shipment of the domain according to that shipment's priority value. Priority values may be utilized to differentiate among shipments with different service levels. For instance, at ordering time, a customer may request expedited shipping and/or handling of a shipment. This type of shipment may be given a higher priority value than a shipment with a basic service level. In one non-limiting example, shipments may be assigned one of sixteen different priority values. In various embodiments, the shipment management component may generate the ranking such that shipments having a higher priority value are ranked higher than shipments having a lower priority value.

In some embodiments, the shipment management components may rank each shipment of the domain according to quantity of units within that shipment. The shipment management components may generate the ranking such that shipments having more units are ranked higher than shipments having less units. For example, in various embodiments, biasing the ranking to favor shipments with larger quantities of units may create more room within random access storage buffer 220, which may in some cases have a fixed capacity.

In some embodiments, the shipment management components may rank each shipment of the domain according to the quantity of time that the shipment has resided in the random access storage buffer. The shipment management components may generate the ranking such that shipments that have resided in the buffer longer are ranked higher than shipments that have resided in the buffer for lesser quantities of time.

In various embodiments, the shipment management component may apply the criteria described above (e.g., shipping deadline, priority level, quantity of units, and quantity of time in the buffer) according to a layered or tie-breaking technique. For instance, the shipments in the domain may be evaluated by a first criterion and a second criterion may be utilized only to break a tie among shipments evaluated by the first criteria. Should the tie not be broken at this point, successive criteria may be utilized until the tie is broken. For instance, in one embodiment, the first criterion utilized may be the expected shipping deadline described above. If two shipments have the same expected shipping deadline, the shipment management component may be configured to break that tie by comparing those two shipments against a second criterion, such as priority level described above. Should the two shipments also have the same priority level, the shipment management component may break that tie by comparing the shipments to a third criterion, such as the quantity of units within the shipment. In the event that all criteria are exhausted and one or more shipments are still tied, the shipment management component may be configured to randomly or pseudo-randomly select the ranking of those shipments.

In some embodiments, instead of the tiered criteria approach described above where ties are broken based on a successive criterion, the shipment management component may be configured to, for each shipment, generate a composite score for that shipment based on multiple subscores and rank the shipments according to the composite scores. For instance, for a given shipment, the shipment management component may generate multiple subscores, each subscore corresponding to one of the criteria described above. For instance, one subscore may correspond to shipment deadline, another to a priority level, another to quantity of units, and so on. For a given shipment, the shipment management component may be configured to generate the composite score based on each subscore for that shipment. In one example, the shipment management component may sum the subscores to generate the composite score. In some cases, the shipment management component may be configured to generate the composite score as being a weighted sum of the different subscores where at least one subscore is weighted differently than other ones of the subscores. For example, the shipment management component may assign a heavier weight to a shipment deadline subscore relative to the weights given to subscores for other criteria. In the composite score example, the shipment management component may be configured to generate the ranking of the shipments based on composite score such that shipments with a larger composite score are ranked higher than shipments with lower composite scores.

In some embodiments, the shipment management component described herein may be configured to dynamically change the criteria and/or weighting of criteria over time or in response to certain events. For instance, in one embodiment, the shipment management component may be configured to determine that the utilization of the random access storage buffer (e.g., the quantity of units stored in the buffer) has reached a threshold. In response to that determination, the shipment management component may be configured to adjust the manner in which the shipment-related criteria described above are applied. In one non-limiting example, the shipment management component may change the criteria such that shipments with larger quantities of units are assigned a higher priority in the ranking of shipments relative to shipments with smaller quantities of units. In this way, the buffer utilization may be reduced to avoid processing slowdowns and/or gridlock within the materials handling facility.

In various embodiments, once the shipment ranking described above has been generated, the shipment management component may be configured to provide an indication of the particular shipment that is to be released from the random access storage buffer 220 as data 1140, which is sent to pack service component 950. Pack service component 950 may pass this information back to buffer management component 960 as data 1150. This information may represent an instruction to release the particular shipment from random access storage buffer 220. In response to this instruction, the buffer management component 960 may control the buffer (illustrated at 1160) such that the buffer releases the specified shipment 225 to a respective one of packing stations 230.

As described above, the buffer management component 960 may store a release order within buffer model 970 (e.g., a release order generated according to Figure 10A). When the buffer management component controls the random access storage buffer 220 at 1160, the buffer management component may instruct the buffer to provide the shipment 225 to the respective packing station according to that release order. Note that, due to the manner in which buffer 220 handles units in some embodiments, the order in which units are released from the random access storage buffer may be, but need not be, the same as the order in which those same units arrive at a respective packing station.

### Example Methods

Embodiments of the system and method for managing shipment release from a storage area of a materials handling facility may include various methods, such as those of Figures 6 and 7 described below. In various embodiments, these methods may be implemented on a computer system, such as that of Figure 8 described below. In various embodiments, the methods described herein may be performed by shipment management component 900 described above, which may also be implemented on a computer system, such as that of Figure 8 described below.

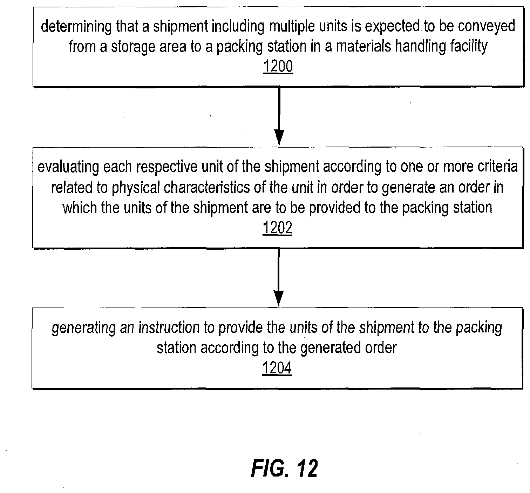

Figure 12 illustrates a flowchart of an example method for determining and applying a release order for a particular shipment. As illustrated at block 1200, the method may include determining that a shipment including multiple units is expected to be conveyed from a storage area to a packing station in a materials handling facility. For instance, this determination may include determining that a shipment has been inducted into a random access storage buffer (e.g., buffer 220) or that a shipment already resides in such a buffer. In general, any shipment to be handled by a random access storage buffer will at some point need to be release to a respective packing station (or otherwise be removed from the buffer).

As illustrated by block 1202, the method may include evaluating each respective unit of the shipment according to one or more criteria related to physical characteristics of the unit in order to generate an order in which the units of the shipment are to be provided to the packing station, such as the release order described above. In various embodiments, this portion of the method may include applying any of the techniques described above with respect to Figure 10A. For instance, the order may be generated such that units with larger footprints (e.g., product length multiplied by product width) are to be provided to the respective packing station prior to units with smaller footprints. In general, this portion of the method may include applying any technique described above with respect to the generation of a release order in Figure 10A. As illustrated by block 1204, the method may include generating an instruction to provide the units of the shipment to the packing station according to the generated order. Examples of such an instruction are illustrated as data 1040 and 1150 described above. For instance, such an instruction may include the initial notification of the release order provided to the buffer management component and/or the subsequent instruction to actually release the shipment.

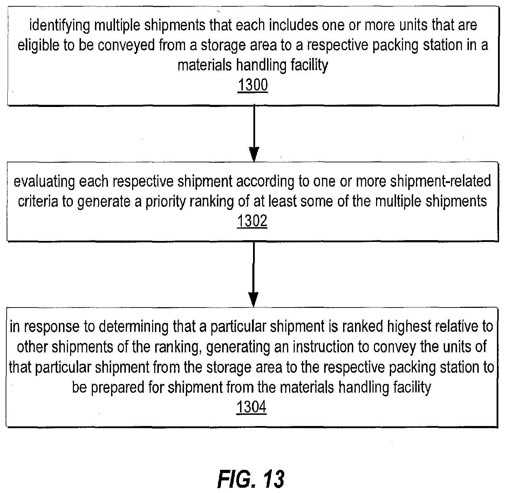

Figure 13 illustrate a flowchart of an example method for selecting a particular shipment to be released from a storage area, according to some embodiments. One example of such a storage area is a random access storage buffer, such as buffer 220 described above. As illustrated by block 1300, the method may include identifying multiple shipments that each includes one or more units that are eligible to be conveyed from a storage area to a respective packing station in a materials handling facility. In some embodiments, this portion of the method may include applying any of the techniques described above with respect to determining a domain or reduced domain of shipments, such as the techniques described above with respect to Figure 11. For instance, block 1300 may include determining the domain of shipments that are complete within the storage area (e.g., a random access storage buffer). As described above, a shipment may be complete if all units of the shipment are present within the random access storage buffer. In some embodiments, block 1300 may also include reducing such a domain, such as eliminating shipments that are not compatible with the packing station that is to receive the shipment. Examples of this domain reduction process are described in more detail with respect to Figure 11.

As illustrated by block 1302, the method may also include evaluating each respective shipment according to one or more shipment-related criteria to generate a ranking of at least some of the multiple shipments. In some embodiments, at least one shipment-related criterion may be based on an expected shipping deadline for a given shipment. Other examples of criteria utilized to generate the ranking may include a priority level of the shipment, quantity of units in the shipment, and/or the quantity of time a shipment has resided within the storage area (e.g., within a random access storage buffer). In general, the method may include applying any of the techniques described above with respect to Figure 11 in order to generate the ranking of shipments.

As illustrated by block 1304, the method may include, in response to determining that a particular shipment is ranked highest relative to other shipments of the generated ranking, generating an instruction to convey the units of that particular shipment from the storage area (such as buffer 220) to the respective packing station (such as a packing station 230) to be prepared for shipment form the materials handling facility. Example of such an instruction include data 1150 and instructions 1160 described above.

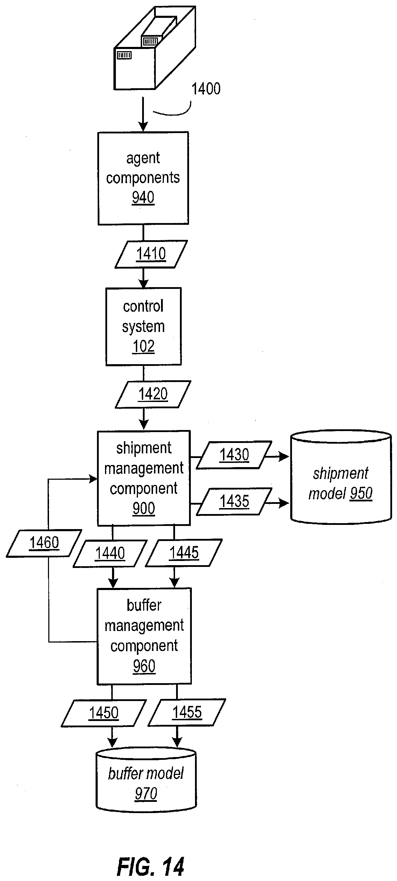

Figure 14 illustrates an example flow diagram for handling reassignment of units at induction time, according to various embodiments. It should be noted that the illustrated example is non-limiting; in other cases, units may be evaluated elsewhere within the materials handling facility or at some other point in the processing sequence of the materials handling facility.

At 1400, a unit is placed within a conveyance receptacle (e.g., a conveyance receptacle 215) at an induction station. In one example, the unit may have just arrived after being picked from inventory 30. Identifiers of the unit and the receptacle may be scanned by an agent component 940 (or, alternatively, a monitoring component 930). These identifiers may be passed to control system 102 as data 1410. The control system may update its own inventory model and/or notify shipment management component 900, as illustrated by data 1420. This data may serve as a notification that the particular unit has been inducted within a particular receptacle into random access storage buffer 220. In some embodiments, this unit may now be considered to be present within the buffer even if the unit has not yet arrived in a storage location of the buffer. In other embodiments, the unit may not be considered to be present within the buffer unit until it actually arrives at a storage location of the buffer (e.g., after being conveyed from an induction station to the respective location in the buffer). In any case, as illustrated by data 1430, shipment management component 900 may update shipment model 950 to indicate that the inducted unit has been assigned to a particular shipment. In various embodiments, this shipment may be the same shipment for which the unit was picked from inventory 30. Shipment management component may receive this information from control system 102 or a pick management component (not illustrated) that controls the picking process. Information similar to 1430 may also be provided to buffer management component 960 as data 1440. In various embodiments, buffer management component 960 may be configured to updated buffer model 970 with data 1450 such that buffer model 970 indicates the inducted unit is assigned to the shipment for which it was originally picked.

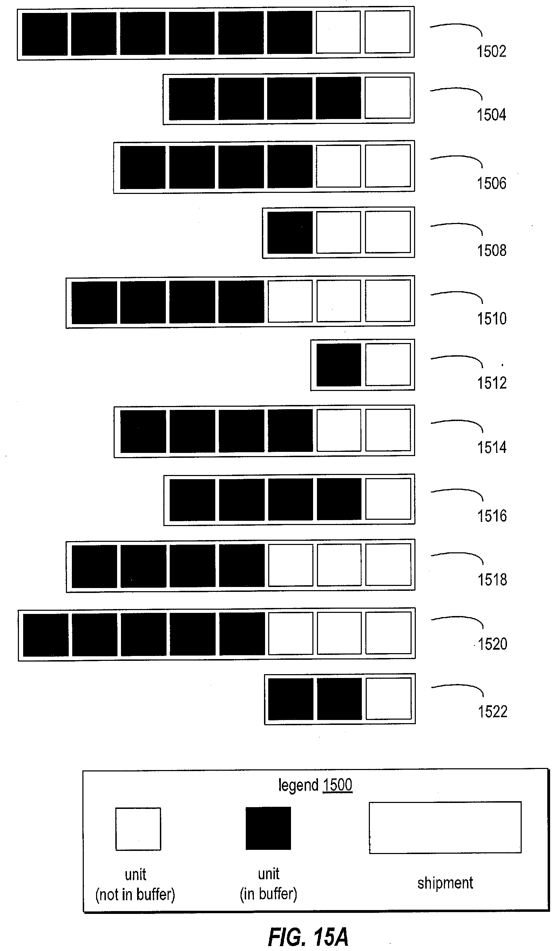

In various embodiments, shipment management component 900 may be configured to reassign the inducted unit to a new shipment different than the shipment for which the unit was originally picked. For instance, shipment management component 900 may be configured to identify an incomplete shipment of random access storage buffer 220 (e.g., a shipment for which some but not all units are stored within the buffer) that needs a unit of an item that is the same as that of the inducted unit. For instance, if the unit inducted at 1400 were a unit of a particular model of coffee maker, shipment management component 900 may be configured to identify an incomplete shipment that needs a unit of that particular model of coffee maker in order to become a complete shipment (e.g., in order for all of the shipment's units to be present within the random access storage buffer). In other cases, there may be multiple incomplete shipments meeting this criteria; the shipment management component may be configured to select one of those incomplete shipments, as described in more detail with respect to Figures 15a-15b. In various embodiments, the shipment management component may perform the above-described analysis based on information received from buffer management component 960. For instance, the buffer management component may provide data 1460 to shipment management component 900; this data may indicate all incomplete shipments that currently reside within random access storage buffer 220. The buffer management component may determine this data from buffer model 970. In other cases, shipment management component 900 may determine similar information from shipment model 950.

In response to identifying the inducted unit of a particular item and an incomplete shipment that requires a unit of that particular item, the shipment management component 900 may generate an instruction to reassign the inducted unit from the original shipment for which it was picked to the identified incomplete shipment of buffer management component 960. In some embodiments, shipment management component 900 may only generate the instruction to reassign the unit if doing so will transform the incomplete shipment into a complete shipment. In cases where an incomplete shipment requires one or more units in addition to the inducted unit in order to become a complete shipment, the shipment management component may additionally identify one or more other units currently stored within the random access storage buffer and reassign those units to the incomplete shipment in order to transform the incomplete shipment into a complete shipment.

In the event that the shipment management component generates an instruction to reassign the inducted unit (and/or any other unit) to an incomplete shipment of the random access storage buffer, the instruction may be provided to shipment model 950 (as data 1435) and/or to buffer management component 960 (as data 1445). Instruction 1435 may update shipment model 950 such that the inducted unit is no longer assigned to the shipment for which it was picked and is reassigned to the identified incomplete shipment of the random access storage buffer. Likewise, in response to instruction 1445, buffer management component 960 may update buffer model 970 with data 1455 such that the buffer model indicates the inducted unit has been reassigned to the identified incomplete shipment.

Once the shipment to which the unit(s) are reassigned has been completed within the random access storage buffer, the shipment management component 900 may designate that shipment as being eligible to be released from the random access storage buffer and provided to a respective packing station to be prepared for shipment from the materials handling facility.

For a given unit that is being considered for reassignment, the shipment management component may select the shipment to which that unit may be reassigned from a group of multiple candidate shipments. In various embodiments, these candidate shipments may be shipments that are incomplete within random access storage buffer 220 (e.g., some but not all units of the shipment are stored within the buffer). The shipment management component may identify this group of candidate shipments from a shipment model (e.g., shipment model 950) or from information received from a component that manages the random access storage buffer (e.g., data 1460 received from buffer management component 960). Figure 15A illustrates an example visual representation of an unsorted group of candidate shipments. For a given unit that is being considered for reassignment (e.g., a unit at an induction station 210), shipment management component 900 may identify a shipment (to which that unit will be reassigned) among candidate shipments 1502-1522. In the illustrated embodiment of Figures 15a, candidate shipments 1502-1522 are not sorted in any particular order. As illustrated by legend 1500, each shipment may include units that are not located within random access storage buffer 220 (denoted by a white square) as well units that are located within the random access storage buffer (denoted by a black square).

In various embodiments, the illustrated group of candidate shipments may be a group selected by shipment management component 900. In some embodiments, when selecting the candidate group, the shipment management component may be configured to enforce a requirement that shipments have at least one unit that is not currently located within the random access storage buffer (e.g., each candidate shipment is incomplete). In some embodiments, the shipment management component may be configured to eliminate one or more shipments from being included within the group of candidate shipment in response to determine that those one or more shipments do not have a need for the particular unit being considered for reassignment. In the illustrated embodiments of Figure 15A, it is assumed that the shipment management component has already enforced the aforesaid requirement of selecting incomplete shipments as well as eliminated one or more shipments according to the aforesaid technique.

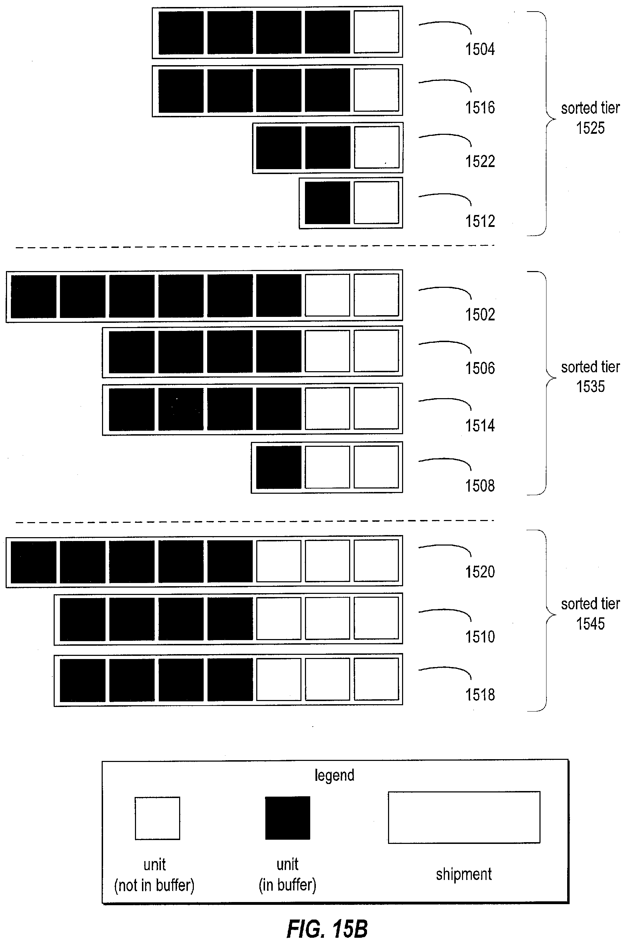

Figure 15B illustrates the same group of candidate shipments 1502-1522 after being categorized into distinct tiers and sorted on a tier-by-tier basis. This categorization and sortation process may be utilized by the shipment management component to determine the particular shipment to which the unit described above (e.g., a unit at an induction station) will be reassigned.

As illustrated, shipment management component 900 may be configured to categorize candidate shipments 1502-1522 into multiple tiers 1525, 1535 and 1545. In various embodiments, the shipment management component may categorize subsets of the candidate shipments into different groups or "tiers" of candidate shipments on the basis of the quantity of units that each candidate shipment requires to become a complete shipment within random access storage buffer 220. For instance, each candidate shipment of tier 1525 (shipments 1504, 1516, 1522 and 1512) requires one additional unit before becoming a complete shipment within random access storage buffer 220. Additionally, each candidate shipment of tier 1535 (shipments 1502, 1506, 1514 and 1508) requires two additional units before becoming a complete shipment within random access storage buffer 220. Likewise, each candidate shipment of tier 1545 (shipments 1520, 1510 and 1518) requires three additional units before becoming a complete shipment within random access storage buffer 220. Additionally, the individual shipments within each tier may be sorted into a respective order based on one or more criteria. Examples of such criteria may include but are not limited to a total quantity of units that will be in that shipment when complete, a priority level assigned to each shipment, a quantity of time a shipment has resided within the random access storage buffer, and/or a shipping deadline assigned to each shipment. In various embodiments, the shipment management component may be configured to evaluate the candidate shipments according to the respective order to identify the second shipment (e.g., higher-ordered shipments are evaluated before lower-ordered shipments). In one example, when evaluating sorted tier 1525, the shipment management component may first evaluate shipment 1504, then (if needed) shipment 1516, then shipment 1522, and finally shipment 1512.

In various embodiments, shipment management component 900 may be configured to evaluate the different groups or tiers of candidate shipments in a sequential manner in order to identify the shipment to which the particular unit will be reassigned. For example, to evaluate the different groups in a sequential manner, the shipment management component may evaluate all candidate shipments within one of the tiers (e.g., sorted tier 1525) prior to evaluating units of a subsequent tier (e.g., sorted tier 1535).

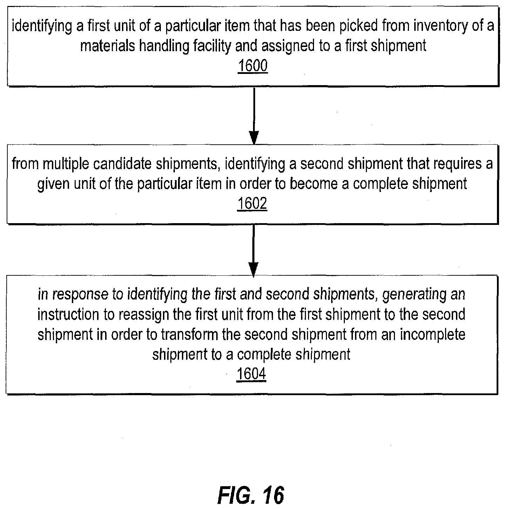

In some embodiments, when evaluating the sorted tiers of candidate shipments to find a shipment to which a particular unit (e.g., a unit that has arrived at an induction station) will be reassigned, the shipment management component may select the first candidate that can be completed by the particular unit (and/or one or more units from the random access storage buffer, if needed). For instance, in one embodiment, shipment 1504 may meet these criteria. In this case, the shipment management component may generate one or more instructions to reassign the particular unit form its original shipment (e.g., the shipment to which it was assigned at picking) to shipment 1504, which is the first shipment encountered that requires the particular unit. The issuance of such instruction may be performed according to the techniques described above with respect to Figure 14, for example. In other cases, the shipment management component may be more selective. For instance, the shipment management component may be configured to enforce one or more constraints to eliminate one or more of candidate shipments 1502-1522 from consideration. Examples of these constraints are described below with respect to Figure 16.

### Example Methods

Embodiments of the system and method for managing reassignment of units among shipments in a materials handling facility may include various methods, such as that of Figure 16 described below. In various embodiments, methods may be implemented on a computer system, such as that of Figure 8 described below. In various embodiments, the methods described herein may be performed by shipment management component 900 described above, which may also be implemented on a computer system, such as that of Figure 8 described below.

Figure 16 illustrates a flowchart of an example method for reassigning a unit from a first shipment to a second shipment in order to complete the second shipment. As illustrated by block 1600, the method may include identifying a first unit (of a particular item) that has been picked from inventory of a materials handling facility and assigned to a first shipment. Examples of such a unit may include the unit evaluated in regard to Figures 4 and 15a-15b described above. For instance, the method may include identifying a unit that has arrived at an induction station after being picked from inventory of the materials handling facility. In other cases, the identified unit may be located elsewhere within the materials handling facility, such as within a defined storage area (e.g., within random access storage buffer 220).

As illustrated by block 1602, the method may include, from multiple candidate shipments (e.g., the candidate shipments of Figures 15a-15b), identifying a second shipment that requires a given unit of the particular item (e.g., the same type of item as the first unit described with respect to block 1600) in order to become a complete shipment. In various embodiments, this may include comparing the first unit to shipments of a shipment model (e.g., shipment model 950) or a storage area model (e.g., buffer model 970) in order to identify multiple candidate shipments (from which the "second" shipment may be selected). As described above, for each candidate shipment, at least one unit assigned to that candidate shipment may have already been picked from inventory and subsequently stored within a defined storage area of the materials handling facility (e.g., within random access storage buffer 220). In various embodiments, each candidate shipment may be an incomplete shipment, which may mean that some but not all of that shipment's units may be stored within random access storage buffer 220. Also as described above, for a given shipment to become a complete shipment in various embodiments, all units of the given shipment must be present within the defined storage area (e.g., within random access storage buffer 220). In various embodiments, a shipment may not be eligible to be released from the random access storage buffer until the shipment has been completed in this manner.

In various embodiments, the method may include enforcing one or more constraints in order to eliminate one or more of the candidate shipments from consideration. In one embodiment, the method may include enforcing a constraint that specifies a given unit cannot be reassigned from a given shipment to another shipment when the given shipment is associated with a priority level that is higher than a priority level to which the other shipment is associated. Different shipments may be assigned different priority levels based on characteristics of the corresponding order. For example, if a customer provides payment for expedited shipping at order time, the corresponding shipments may be assigned a higher priority level than shipments for which regular, non-expedited shipping is specified.

In one embodiment, the method may include enforcing a constraint that specifies a given unit cannot be reassigned from a given shipment to another shipment if all units of the given shipment are present within the defined storage area. For instance, if a shipment is already complete within the random access storage buffer, the method may avoid breaking that shipment up to complete another shipment.

In one embodiment, the method may include enforcing a constraint that specifies a given unit cannot be reassigned from a given shipment to another shipment when the given shipment is associated with a shipping deadline that requires the given shipment to be shipped within a threshold period of time from a current time. For example, if a shipment is near its shipping deadline (e.g., the time by which that shipment is expected to be ready for shipment from the materials handling facility), the method may avoid reassigning units from that shipment to other shipments.

In one embodiment, the method may include enforcing a constraint that specifies a given unit cannot be reassigned from a given shipment to another shipment when the given shipment includes one or more items that have resided within the random access storage buffer for more than a threshold period of time. For instance, for a shipment that has been in an incomplete state for a significant amount of time, the method may avoid removing units from that shipment (in order to facilitate the completion of that shipment). An example scenario in which this may occur includes an incomplete shipment that is waiting for a single, low-volume unit to be restocked within the materials handling facility in order to become complete.

In one embodiment, the method may include enforcing a constraint that specifies a given unit cannot be reassigned from a given shipment to another shipment when a second unit to replace the given unit has not been picked from inventory (where the second unit and the given unit are units of a common item). In this way, the method may in some embodiments ensure that when a unit is reassigned from a shipment, a replacement unit will be available for that shipment.

Note that the constraints described above are merely examples and may not be utilized in all embodiments. More specifically, all, some, or none of the above-described constraints may be enforced in various embodiments of the method. In some cases, modified forms of the above-described constraints (or new constraints altogether) may be used in some cases. Embodiments are not limited to the specific constraints described herein.

As illustrated at block 1604, the method may include, in response to identifying the first and second shipments as described with respect to blocks 1600 and 1602, generating an instruction to reassign the first unit from the first shipment to the second shipment in order to transform the second shipment from an incomplete shipment to a complete shipment. As described above, a complete shipment may be a shipment for which all units are present within a defined storage area, such as random access storage buffer 220. In various embodiments, once a shipment is complete, it may be eligible for release from random access storage buffer 220 and may be provided to a packing station 210 to be prepared for shipment from the materials handling facility.

As described above, embodiments may include a shipment model (e.g., shipment model 950) that maintains the current state of any and/or all shipment-to-unit assignments pertaining to the materials handling facility. In some embodiments, the instruction generated at 1604 may be an instruction that updates the shipment model such that the shipment model indicates the first unit is no longer assigned to the first shipment and is now assigned to the second shipment. In embodiments that include a storage area model (e.g., buffer model 970) as described above, the instruction generated at 1604 may update such a model in a similar manner.

In various embodiments, the method may include determining that the second shipment described above (e.g., blocks 1602-1604) may additionally require a unit of another item (which may or may not be the same type of item of block 1600) in order to become a complete shipment within the random access storage buffer. In this case, the method may include identifying one or more additional shipments from which units may be reassigned to the second shipment to make the second shipment a complete shipment. For instance, the method may include determining that a third shipment is assigned a particular unit of the item needed by the second shipment in order to become complete. In response to the aforesaid determinations, the method may include generating an instruction to reassign the particular unit from the third shipment to the second shipment in order to transform the second shipment to a complete shipment (in conjunction with the reassignment of the first unit to the second shipment). In one non-limiting example, the first unit (block 1600) may be a unit at an induction station while the particular unit described above may be a unit stored within random access storage buffer. Accordingly, the method may in various embodiments reassign units irrespective of whether such units reside inside or outside of the random access storage buffer. Once complete, the second shipment may be eligible for release from random access storage buffer 220 and may be provided to a packing station 210 to be prepared for shipment from the materials handling facility. In various embodiments, the method may include initiating the actual release of the second shipment by generating a release instruction, such as described above.

In various embodiments a computer-implemented method may include generating within a memory a model of multiple unit handling processes of a materials handling facility, wherein for each unit handling process the model indicates a measured throughput rate at which that unit handling process processes units, wherein at least some of the multiple unit handling processes are performed in a particular order to prepare shipments of units to be shipped from the materials handling facility. The method may also include, based on at least one target output rate that is a goal for the output rate of a given unit handling process of the multiple unit handling processes, evaluating the model to generate a particular target throughput rate that is a goal for the respective throughput rate of a particular unit handling process that is performed prior to the given unit handling process. The method may also include based on the particular target throughput rate for the particular unit handling process, generating one or more instructions to control the respective throughput rate of units processed by the particular unit handling process.

In various embodiments, the one or more instructions include one or more instructions to control a rate at which units are picked from inventory to be processed by one or more subsequent unit handling processes.

In various embodiments, the method may include for a first time period subsequent to the generation of said one or more instructions, evaluating the model to determine that the measured throughput rate of the particular unit handling process during that first time period deviates from the particular target throughput rate. In various embodiments, the method may include, in response to that determination, generating a second target throughput rate for the particular unit handling process, the second target throughput rate to be utilized for one or more subsequent time periods after the first time period, and based on the second target throughput rate, generating one or more additional instructions to control the throughput rate of units processed by the particular unit handling process during said one or more subsequent time periods.

In various embodiments, the second target throughput rate is generated such that an average of the measured throughput rate of the particular unit handling process during the first time period and the second target throughput rate utilized during said one or more subsequent time periods is equal to the particular target throughput rate for the particular unit handling process.

In various embodiments, the method may include, subsequent to the one or more subsequent time periods, utilizing the particular target throughput rate again to generate one or more instructions to control the respective throughput rate of units processed by the particular unit handling process.

In various embodiments, the stored model further indicates units that are part of different collections of units, wherein at least some of said unit handling processes move items from one collection of units to another collection of units.

In various embodiments, the method may include evaluating the model to determine that a quantity of units within one of said collections of units has reached a threshold. In various embodiments, the method may include, in response to that determination, modifying the particular target throughput rate, and based on the modified target throughput rate, generating one or more additional instructions to control the respective throughput rate of units processed by the particular unit handling process.

In various embodiments, the method may include evaluating the model to determine that a quantity of units within one of said collections of units has reached a threshold, and in response to that determination, generating one or more of: an alert message to alert an agent that the threshold has been reached, or a recommendation message to provide a recommendation for modifying the quantity of units within the respective collection of units.

In various embodiments, the recommendation indicates a change in a quantity of labor staffed on one or more of said unit handling processes. In various embodiments, the units of at least one of said collections of units are stored within a random access storage buffer comprising multiple unit locations.

In various embodiments, the multiple unit handling processes may include one or more of a picking process to pick units from one or more inventory locations, a conveyance process to convey units from one location of the materials handling facility to another location of the materials handling facility, an induction process during which units are moved into a random access storage buffer compressing multiple unit locations, or a packing process during which one or more units received from the random access storage buffer are packed into respective shipping containers to be shipped from the materials handling facility.

In various embodiments, at least one target output rate is based on: a rate at which units are expected to be packed into shipments prior to being shipped from the materials handling facility or a rate at which shipments are expected to be processed within the materials handling facility.

In various embodiments, another method may include identifying multiple shipments that are eligible to be conveyed from a storage area to a respective packing station in a materials handling facility, wherein each eligible shipment includes one or more units, wherein identifying each eligible shipment includes determining that shipment is compatible with one or more packing capabilities of said respective packing station. In various embodiments, the method may include evaluating each respective shipment according to one or more shipment-related criteria to generate a ranking of at least some of the multiple shipments, and in response to determining that a particular shipment is ranked highest relative to other shipments of the ranking, generating an instruction to convey the units of that particular shipment from the storage area to the respective packing station to be prepared for shipment from the materials handling facility.

In various embodiments, the storage area includes a random access storage buffer comprising multiple locations at which units are stored. In various embodiments, an eligible shipment is a shipment for which all units are stored within said storage area.

In various embodiments, determining that a given shipment is compatible with packing capabilities of the respective packing station comprises determining that the respective packing station is configured to pack shipments of one or more particular shipment sizes, enforcing a restriction requiring that each identified shipment have a size compatible with said one or more particular shipment sizes.

In various embodiments, for each respective shipment, said one or more shipment-related criteria include one or more of a priority level assigned to the respective shipment, a shipping deadline associated with the respective shipment, a quantity of units that are part of the respective shipment, a quantity of time that the respective shipment has been located within the storage area.

In various embodiments, to generate said ranking, the method comprises for each of at least some of said multiple shipments: generating a subscore for each of multiple shipment-related criteria, and generating a composite score based on each subscore. The method may also include generating said ranking by ranking said multiple shipments according to the respective composite scores of the multiple shipments.

In various embodiments, each composite score for a given shipment is generated as the sum of the respective subscores for the given shipment. In various embodiments, the sum of the respective subscores is a weighted sum, wherein at least one subscore is weighted differently than other subscores in the weighted sum.

In various embodiments, the method may include determining that the quantity of units stored in said storage area has reached a threshold quantity, and in response to that determination, changing the shipment-related criteria utilized to evaluate each respective shipment such that shipments with larger quantities of units are assigned a higher position in said ranking than shipments with smaller quantities of units. In various embodiments, the method comprises sending the generated instruction to a computer system that controls the release of units from said storage area.

In various embodiments, generating the ranking comprises generating a preliminary ranking of the shipments according to a first shipment related criterion, and utilizing a second shipment criterion to break a tie among two or more shipments ranked equivalently in the preliminary ranking.

In various embodiments, the respective packing station is associated with a primary packing station capability and a secondary packing station capability, wherein identifying said multiple shipments comprises, subsequent to determining that no shipments of a group of shipments are compatible with the primary packing station capability, identifying one or more shipments from the group of shipments that are compatible with the secondary packing station capability.

In another method, embodiments may include determining that a shipment including multiple units is expected to be conveyed from a storage area to a packing station in a materials handling facility, evaluating each respective unit of the shipment according to one or more criteria related to physical characteristics of the unit in order to generate an order in which the units of the shipment are to be provided to the packing station, generating an instruction to provide the units of the shipment to said packing station according to said order.

In various embodiments, the criteria may includes one or more of a measure of length of each respective unit, a measure of width of each respective unit, a measure of depth of each respective unit, a measure of surface area of each respective unit, a measure of volume of each respective unit, a measure of fragility of each respective unit, or a measure of weight of each respective unit.

In some embodiments, the evaluating comprises for each unit of the shipment, multiplying a length of that unit by a width of that unit to determine a footprint value, and generating said order such that the order indicates the units of the shipment are to be provided to the packing station in order of descending footprint value. In some embodiments, the length of a given unit is the largest dimension of that unit relative to other dimensions of that unit, wherein the width of a given unit is the second largest dimension of that unit relative to other dimensions of that unit. In some cases, the storage area includes a random access storage buffer comprising multiple locations at which units are stored.

In some embodiments, the material handling facility comprises one or more induction stations for placing single units of said shipment into respective receptacles and conveying each receptacle to said storage area, and the method may include generating said order for said shipment upon arrival of one or more units of the shipment at one or more of said induction stations. In some cases, the method may include providing the generated instruction to a computer system controlling the removal of units from said storage area.

In various embodiments, the computer system controlling the removal of units from said storage area maintains stored records that associate identifiers of the receptacles with a common shipment identifier, and the method may include providing that shipment identifier along with the generated instruction to specify the shipment to which the generated order applies.

In another method, embodiments may include identifying a first unit of a particular item that has been picked from inventory of a materials handling facility and assigned to a first shipment. The method may also include, from a plurality of candidate shipments, identifying a second shipment that requires a given unit of said particular item in order to become a complete shipment; wherein for each candidate shipment, at least one unit assigned to that candidate shipment has already been picked from inventory and subsequently stored within a defined storage area of the materials handling facility; wherein for a given shipment to become a complete shipment, all units of the given shipment must be present within the defined storage area. The method may also include in response to identifying the first and second shipments, generating an instruction to reassign the first unit of the particular item from the first shipment to the second shipment in order to transform the second shipment from an incomplete shipment to a complete shipment. In various embodiments, the defined storage area includes a random access storage buffer comprising multiple locations at which units are stored.

In some cases, the method may include determining that the second shipment additionally requires a unit of an other item in order to become a complete shipment within said defined storage area, determining that a third shipment is assigned a particular unit of said other item, wherein that particular unit is stored within said defined storage area, and in response to the determinations, generating an instruction to reassign the particular unit from the third shipment to the second shipment in order to transform the second shipment to a complete shipment.

In some cases the method may include prior to identifying the second shipment among said candidate shipments, eliminating at least some of the plurality of candidate shipments from consideration. In various embodiments, the method may include eliminating at least one candidate shipment from consideration in response to determining that said at least one candidate shipment does not require a unit of the particular item in order to become a complete shipment.

In various embodiments, eliminating at least some of the plurality of candidate shipments from consideration comprises enforcing one or more constraints including one or more of a constraint that specifies a given unit cannot be reassigned from a given shipment to an other shipment when the given shipment is associated with a priority level that is higher than a priority level to which the other shipment is associated, a constraint that specifies a given unit cannot be reassigned from a given shipment to an other shipment if all units of the given shipment are present within the defined storage area, a constraint that specifies a given unit cannot be reassigned from a given shipment to an other shipment when the given shipment is associated with a shipping deadline that requires the given shipment to be shipped within a threshold period of time from a current time, a constraint that specifies a given unit cannot be reassigned from a given shipment to an other shipment when the given shipment includes one or more items that have resided within said defined storage area for more than a threshold period of time, or a constraint that specifies a given unit cannot be reassigned from a given shipment to an other shipment when a second unit to replace the given unit has not been picked from said inventory; wherein the second unit and said given unit are units of a common item.

In various embodiments, the method may include categorizing subsets of said plurality of candidate shipments into different groups of candidate shipments on the basis of the quantity of units that each candidate shipment requires to become a complete shipment. In some cases, the method may include evaluating the different groups of candidate shipments in a sequential manner in order to identify said second shipment among one of the different groups; wherein evaluating the different groups in a sequential manner comprises evaluating all candidate shipments within one of said different groups prior to evaluating a subsequent group of said different groups. In various embodiments, the method may include prior to evaluating a given one of said different groups of candidate shipments, sorting the candidate shipments of that group into a respective order based on one or more criteria. In some cases, the one or more criteria include one or more of a quantity of units for each shipment, a quantity of time each shipment has resided within said defined storage area, a priority level assigned to each shipment, or a shipping deadline assigned to each shipment. In various embodiments, the method may include evaluating the candidate shipments according to the respective order to identify the second shipment.

In various embodiments, the materials handling facility comprises one or more induction stations for receiving units picked from said inventory and for subsequently providing the units to the defined storage area, wherein the method comprises identifying said first unit subsequent to the arrival of that unit at one of said induction stations and prior to the storing of that unit within said defined storage area.

In various embodiments, the method may include identifying said first unit while the first unit resides within said defined storage area of the materials handling facility. In various embodiments, the method may include updating a shipment model stored with a memory, wherein for each shipment of multiple shipments processed by the materials handling facility, the shipment model includes information that specifies the units that are assigned to that shipment; wherein said instruction is an instruction to update the shipment model such that the shipment model indicates the first unit has been reassigned from the first shipment to the second shipment. In various embodiments, units stored within said defined storage area are controlled by a particular component configured to update a storage area model stored within a memory; wherein for each shipment that has at least one unit stored within said defined storage area, the storage area model includes information that associates that unit with a respective shipment; wherein said instruction is an instruction to update said storage area model such that the storage area model indicates that said first unit has been assigned to said second shipment. In various embodiments, the method may include subsequent to said second shipment becoming a complete shipment, generating an instruction to release the second shipment from the defined storage area to a respective packing station to be prepared for shipment from the materials handling facility.

The methods described herein may be implemented in software, hardware, or a combination thereof, in different embodiments. In addition, the order of the blocks of the methods may be changed, and various elements may be added, reordered, combined, omitted, modified, etc. Various modifications and changes may be made as would be obvious to a person skilled in the art having the benefit of this disclosure. The various embodiments described herein are meant to be illustrative and not limiting. Many variations, modifications, additions, and improvements are possible. Accordingly, plural instances may be provided for components described herein as a single instance. Boundaries between various components, operations and data stores are somewhat arbitrary, and particular operations are illustrated in the context of specific illustrative configurations. Other allocations of functionality are envisioned and may fall within the scope of claims that follow. Finally, structures and functionality presented as discrete components in the exemplary configurations may be implemented as a combined structure or component. These and other variations, modifications, additions, and improvements may fall within the scope of embodiments as defined in the claims that follow.

## Claims

1. A system (800), comprising:
a memory (820); and
one or more processors (810a, 810b, 810n) coupled to the memory, wherein the memory comprises program instructions executable by the one or more processors to implement a process control component configured to:
generate within the memory a stored model (305) of multiple unit handling processes of a materials handling facility (100), wherein for each unit handling process the model indicates a measured throughput rate at which that unit handling process processes units, wherein at least some of the multiple unit handling processes are different types of packing stations (230a, 230b, 230n) that process units released from a random access storage buffer in order to prepare shipments of units to be shipped from the materials handling facility, wherein at least another one or more of the multiple unit handling processes is an upstream unit handling process (210) that moves units to the random access storage buffer, wherein the upstream unit handling process moves units that will be released from the random access storage buffer to a particular one of the packing stations;
based on at least one target output rate that is a goal for the output rate of a given type of pack station, evaluate the model to generate a particular target throughput rate that is a goal for the respective throughput rate of the upstream unit handling process for units moving to the given type of pack station; and
based on the particular target throughput rate generated for the upstream unit handling process, generate one or more instructions to control the respective throughput rate of units being moved to the given type of pack station and processed by the upstream unit handling process.

2. The system of claim 1, wherein the one or more instructions that are generated include one or more instructions to control a rate at which units being moved to the given type of pack station are picked from inventory.

3. The system of claim 1 or claim 2, wherein the process control component is configured to:
for a first time period subsequent to the generation of said one or more instructions, evaluate the model to determine that the measured throughput rate of the upstream unit handling process for units being moved to the given type of pack station during that first time period deviates from the particular target throughput rate; and
in response to that determination, generate a second target throughput rate for the upstream unit handling process for units being moved to the given type of pack station, the second target throughput rate to be utilized for one or more subsequent time periods after the first time period; and
based on the second target throughput rate, generate one or more additional instructions to control the throughput rate of units being moved to the given type of pack station and processed by the particular upstream unit handling process during said one or more subsequent time periods.

4. The system of claim 3, wherein the second target throughput rate is generated such that an average of the measured throughput rate of the particular unit handling process being moved to the given type of pack station during the first time period and the second target throughput rate utilized during said one or more subsequent time periods is equal to the particular target throughput rate for the upstream unit handling process being moved to the given type of pack station.

5. The system of claim 3 or claim 4, wherein after the one or more subsequent time periods, the process control component is configured to utilize the particular target throughput rate again to generate one or more instructions to control the respective throughput rate of units being moved to the given type of pack station and processed by the upstream unit handling process.

6. The system of any one of the preceding claims, wherein the stored model further indicates units that are part of different collections of units, wherein at least some of said unit handling processes move items from one collection of units to another collection of units.

7. The system of claim 6, wherein the process control component is configured to:
evaluate the model to determine that a quantity of units within one of said collections of units has reached a threshold, wherein the units of the quantity of units are to be moved to the given type of pack station; and
in response to that determination, modify the particular target throughput rate, and based on the modified target throughput rate, generate one or more additional instructions to control the respective throughput rate of units being moved to the given type of pack station and processed by the upstream unit handling process.

8. A computer-implemented method, comprising:
generating within a memory a model of multiple unit handling processes of a materials handling facility, wherein for each unit handling process the model indicates a measured throughput rate at which that unit handling process processes units, wherein at least some of the multiple unit handling processes are different types of packing stations that process units released from a random access storage buffer in order to prepare shipments of units to be shipped from the materials handling facility, wherein at least another one or more of the multiple unit handling processes is an upstream unit handling process that moves units to the random access storage buffer, wherein the upstream unit handling process moves units that will be released from the random access storage buffer to a particular one of the packing stations;
based on at least one target output rate that is a goal for the output rate of a given type of pack station, evaluating the model to generate a particular target throughput rate that is a goal for the respective throughput rate of the upstream unit handling process for units moving to the given type of pack station; and
based on the particular target throughput rate generated for the upstream unit handling process, generating one or more instructions to control the respective throughput rate of units being moved to the given type of pack station and processed by the upstream unit handling process.

9. The computer-implemented method of claim 8, wherein the stored model further indicates units that are part of different collections of units, wherein at least some of said unit handling processes move items from one collection of units to another collection of units.

10. The computer-implemented method of claim 9, wherein the method comprises:
evaluating the model to determine that a quantity of units within one of said collections of units has reached a threshold; and
in response to that determination, generating one or more of: an alert message to alert an agent that the threshold has been reached, or a recommendation message to provide a recommendation for modifying the quantity of units within the respective collection of units.

11. The computer-implemented method of claim 10, wherein said recommendation indicates a change in a quantity of labor staffed on one or more of said unit handling processes.

12. The computer-implemented method of any one of claims 9 - 11, wherein the units of at least one of said collections of units are stored within the random access storage buffer comprising multiple unit locations.

13. The computer-implemented method of any one of claims 8 - 12, wherein the multiple unit handling processes include one or more of:
a picking process to pick units from one or more inventory locations;
a conveyance process to convey units from one location of the materials handling facility to another location of the materials handling facility;
an induction process during which units are moved into a random access storage buffer compressing multiple unit locations; or
a packing process during which one or more units received from the random access storage buffer are packed into respective shipping containers to be shipped from the materials handling facility.

14. The computer-implemented method of any one of claims 8 - 13, wherein the at least one target output rate for the given type of pack station is based on: a rate at which units are expected to be packed into shipments prior to being shipped from the materials handling facility or a rate at which shipments are expected to be processed within the materials handling facility.

15. A computer-readable storage medium, storing program instructions computer-executable on a computer system to implement a process control component configured to perform the method of any one of claims 8 - 14.

## Patentansprüche

1. System (800), das Folgendes umfasst:
einen Speicher (820); und
einen oder mehrere Prozessoren (810a, 810b, 810n), gekoppelt mit dem Speicher, wobei der Speicher Programmanweisungen, ausführbar durch den einen oder die mehreren Prozessoren umfasst, um eine Prozesssteuerungskomponente umzusetzen, die ausgelegt ist zum:
Erzeugen, innerhalb des Speichers, eines gespeicherten Modells (305) von Verarbeitungsprozessen für mehrere Einheiten einer Materialverarbeitungseinrichtung (100), wobei das Modell für jeden Einheitsverarbeitungsprozess eine gemessene Durchsatzrate anzeigt, bei der der Einheitsverarbeitungsprozess Einheiten verarbeitet, wobei zumindest einige der Verarbeitungsprozesse für mehrere Einheiten unterschiedliche Typen von Verpackungsstationen (230a, 230b, 230n) sind, die Einheiten verarbeiten, die von einem Direktzugriffslagerpuffer freigegeben werden, um Versand der zu versendenden Einheiten aus der Materialverarbeitungseinrichtung vorzubereiten, wobei zumindest ein anderer oder mehrere der Verarbeitungsprozesse für mehrere Einheiten ein vorgelagerter Einheitsverarbeitungsprozess (210) ist, der Einheiten in den Direktzugriffslagerpuffer bewegt, wobei der vorgelagerte Einheitsverarbeitungsprozess Einheiten bewegt, die aus dem Direktzugriffslagerpuffer zu einer bestimmten der Verpackungsstationen freigegeben werden;
Evaluieren, basierend auf zumindest einer Zielausgaberate, die eine Vorgabe für die Ausgaberate eines gegebenen Typs von Verpackungsstation ist, des Modells zum Erzeugen einer bestimmten Zieldurchsatzrate, die eine Vorgabe für die entsprechende Durchsatzrate des vorgelagerten Einheitsverarbeitungsprozesses für Einheiten ist, die sich zu dem gegebenen Typ von Verpackungsstation bewegen; und
Erzeugen, basierend auf der bestimmten, für den vorgelagerten Einheitsverarbeitungsprozess erzeugten Zieldurchsatzrate, von einer oder mehreren Anweisungen zum Steuern der jeweiligen Durchsatzrate von Einheiten, die zu dem gegebenen Typ von Verpackungsstation bewegt und durch den vorgelagerten Einheitsverarbeitungsprozess verarbeitet werden.

2. System nach Anspruch 1, wobei die eine oder mehreren Anweisungen, die erzeugt werden, eine oder mehrere Anweisungen zum Steuern einer Rate umfassen, mit der Einheiten, die zu dem gegebenen Typ von Verpackungsstation bewegt werden, aus dem Lager aufgenommen werden.

3. System nach Anspruch 1 oder Anspruch 2, wobei die Prozesssteuerungskomponente ausgelegt ist zum:
Evaluieren, für eine erste Zeitdauer im Anschluss an die Erzeugung der einen oder mehreren Anweisungen, des Modells zum Bestimmen, dass die gemessene Durchsatzrate des vorgelagerten Einheitsverarbeitungsprozesses für Einheiten, die während dieser ersten Zeitdauer zu dem gegebenen Typ von Verpackungsstation bewegt werden, von der bestimmten Zieldurchsatzrate abweicht; und
Erzeugen, in Reaktion auf diese Bestimmung, einer zweiten Zieldurchsatzrate für den vorgelagerten Einheitsverarbeitungsprozess für Einheiten, die zu dem gegebenen Typ von Verpackungsstation bewegt werden, wobei die zweite Zieldurchsatzrate für eine oder mehrere anschließende Zeitdauern nach der ersten Zeitdauer zu verwenden ist; und
Erzeugen, basierend auf der zweiten Zieldurchsatzrate, von einer oder mehreren zusätzlichen Anweisungen zum Steuern der Durchsatzrate von Einheiten, die zu einem gegebenen Typ von Verpackungsstation bewegt und während der einen oder mehreren nachfolgenden Zeitdauern durch den bestimmten vorgelagerten Einheitsverarbeitungsprozess verarbeitet werden.

4. System nach Anspruch 3, wobei die zweite Zieldurchsatzrate so erzeugt wird, dass ein Durchschnitt der gemessenen Durchsatzrate des bestimmten Einheitsverarbeitungsprozesses, der während der ersten Zeitdauer zu dem gegebenen Typ von Verpackungsstation bewegt wird, und der zweiten Zieldurchsatzrate, die während der einen oder mehreren nachfolgenden Zeitdauern genutzt wird, gleich der bestimmten Zieldurchsatzrate für den vorgelagerten Einheitsverarbeitungsprozess ist, der zu dem gegebenen Typ von Verpackungsstation bewegt wird.

5. System nach Anspruch 3 oder Anspruch 4, wobei nach der einen oder den mehreren nachfolgenden Zeitdauern die Prozesssteuerungskomponente dazu ausgelegt ist, die bestimmte Zieldurchsatzrate erneut zu verwenden, um eine oder mehrere Anweisungen zum Steuern der jeweiligen Durchsatzrate von Einheiten, die zu dem gegebenen Typ von Verpackungsstation bewegt und durch den vorgelagerten Einheitsverarbeitungsprozess verarbeitet werden, zu erzeugen.

6. System nach einem der vorhergehenden Ansprüche, wobei das gespeicherte Modell ferner Einheiten anzeigt, die Teil von verschiedenen Sammlungen von Einheiten sind, wobei zumindest einige der Einheitsverarbeitungsprozesse Objekte von einer Sammlung von Einheiten zu einer anderen Sammlung von Einheiten bewegen.

7. System nach Anspruch 6, wobei die Prozesssteuerungskomponente ausgelegt ist zum:
Evaluieren des Modells zum Bestimmen, dass eine Anzahl von Einheiten innerhalb einer der Sammlungen von Einheiten eine Schwelle erreicht hat, wobei die Einheiten der Anzahl von Einheiten zu dem gegebenen Typ von Verpackungsstation zu bewegen sind; und
Modifizieren, in Reaktion auf diese Bestimmung, der bestimmten Zieldurchsatzrate, und Erzeugen, basierend auf der modifizierten Zieldurchsatzrate, von einer oder mehreren zusätzlichen Anweisungen zum Steuern der jeweiligen Durchsatzrate von Einheiten, die zu dem gegebenen Typ von Verpackungsstation bewegt und durch den vorgelagerten Einheitsverarbeitungsprozess verarbeitet werden.

8. Computerumgesetztes Verfahren, das Folgendes umfasst:
Erzeugen, innerhalb eines Speichers, eines Modells von Verarbeitungsprozessen für mehrere Einheiten einer Materialverarbeitungseinrichtung, wobei das Modell für jeden Einheitsverarbeitungsprozess eine gemessene Durchsatzrate anzeigt, bei der der Einheitsverarbeitungsprozess Einheiten verarbeitet, wobei zumindest einige der Verarbeitungsprozesse für mehrere Einheiten unterschiedliche Typen von Verpackungsstationen sind, die Einheiten verarbeiten, die von einem Direktzugriffslagerpuffer freigegeben werden, um Versand der zu versendenden Einheiten aus der Materialverarbeitungseinrichtung vorzubereiten, wobei zumindest ein anderer oder mehrere der Verarbeitungsprozesse für mehrere Einheiten ein vorgelagerter Einheitsverarbeitungsprozess ist, der Einheiten in den Direktzugriffslagerpuffer bewegt, wobei der vorgelagerte Einheitsverarbeitungsprozess Einheiten bewegt, die aus dem Direktzugriffslagerpuffer zu einer bestimmten der Verpackungsstationen freigegeben werden;
Evaluieren, basierend auf zumindest einer Zielausgaberate, die eine Vorgabe für die Ausgaberate eines gegebenen Typs von Verpackungsstation ist, des Modells zum Erzeugen einer bestimmten Zieldurchsatzrate, die eine Vorgabe für die entsprechende Durchsatzrate des vorgelagerten Einheitsverarbeitungsprozesses für Einheiten ist, die sich zu dem gegebenen Typ von Verpackungsstation bewegen; und
Erzeugen, basierend auf der bestimmten, für den vorgelagerten Einheitsverarbeitungsprozess erzeugten Zieldurchsatzrate, von einer oder mehreren Anweisungen zum Steuern der jeweiligen Durchsatzrate von Einheiten, die zu dem gegebenen Typ von Verpackungsstation bewegt und durch den vorgelagerten Einheitsverarbeitungsprozess verarbeitet werden.

9. Computerumgesetztes Verfahren nach Anspruch 8, wobei das gespeicherte Modell ferner Einheiten anzeigt, die Teil von verschiedenen Sammlungen von Einheiten sind, wobei zumindest einige der Einheitsverarbeitungsprozesse Objekte von einer Sammlung von Einheiten zu einer anderen Sammlung von Einheiten bewegen.

10. Computerumgesetztes Verfahren nach Anspruch 9, wobei das Verfahren Folgendes umfasst:
Evaluieren des Modells zum Bestimmen, dass eine Anzahl von Einheiten innerhalb einer der Sammlungen von Einheiten eine Schwelle erreicht hat; und
Erzeugen, in Reaktion auf diese Bestimmung, von einem oder mehreren aus: einer Alarmnachricht zum Alarmieren eines Agenten, dass die Schwelle erreicht wurde, oder eine Empfehlungsnachricht zum Bereitstellen einer Empfehlung zum Modifizieren der Anzahl von Einheiten innerhalb der entsprechenden Sammlung von Einheiten.

11. Computerumgesetztes Verfahren nach Anspruch 10, wobei die Empfehlungsnachricht eine Änderung einer Anzahl von eingesetztem Personal an einem oder mehreren der Einheitsverarbeitungsprozesse anzeigt.

12. Computerumgesetztes Verfahren nach einem der Ansprüche 9 - 11, wobei die Einheiten von zumindest einer der Sammlungen von Einheiten innerhalb des Direktzugriffslagerpuffers, umfassend mehrere Einheitenpositionen, gespeichert werden.

13. Computerumgesetztes Verfahren nach einem der Ansprüche 8 - 12, wobei die Verarbeitungsprozesse für mehrere Einheiten einen oder mehrere aus Folgenden umfassen:
einen Aufnahmeprozess zum Aufnehmen von Einheiten aus einem oder mehreren Lagerorten;
einen Beförderungsprozess zum Befördern von Einheiten von einem Ort der Materialverarbeitungseinrichtung zu einem anderen Ort der Materialverarbeitungseinrichtung;
einen Einsetzungsprozess, während dessen Einheiten in einem Direktzugriffslagerpuffer, umfassend mehrere Einheitenpositionen, bewegt werden; oder
einen Verpackungsprozess, während dessen eine oder mehrere vom Direktzugriffslagerpuffer empfangene Einheiten in entsprechende Versandbehälter verpackt werden, um von der Materialverarbeitungseinrichtung versendet zu werden.

14. Computerumgesetztes Verfahren nach einem der Ansprüche 8 - 13, wobei die zumindest eine Zielausgaberate für den gegebenen Typ von Verpackungsstation basiert auf: einer Rate, mit der erwartungsgemäß Einheiten in Sendungen verpackt werden sollen, bevor sie von der Materialverarbeitungseinrichtung versendet werden, oder eine Rate, mit der erwartungsgemäß Sendungen in der Materialverarbeitungseinrichtung verarbeitet werden.

15. Computerlesbares Speichermedium, das Programmanweisungen speichert, die auf einem Computersystem ausführbar sind, um eine Prozesssteuerungskomponente umzusetzen, die dazu ausgelegt ist, das Verfahren nach einem der Ansprüche 8 - 14 durchzuführen.

## Revendications

1. Système (800), comprenant :
une mémoire (820) ; et
un ou plusieurs processeurs (810a, 810b, 810n) couplés à la mémoire, la mémoire comprenant des instructions de programme exécutables par le ou les processeurs pour mettre en oeuvre un composant de commande de processus configuré pour :
générer dans la mémoire un modèle stocké (305) de processus de manutention d'unités multiples d'une installation de manutention de matériaux (100), dans lequel le modèle indique pour chaque processus de manutention d'unités un débit de traitement mesuré auquel ce processus de manutention d'unités traite des unités, dans lequel au moins certains des processus de manutention d'unités multiples sont différents types de stations de conditionnement (230a, 230b, 230n) qui traitent des unités débloquées à partir d'un stock tampon à accès aléatoire afin de préparer des cargaisons d'unités à expédier à partir de l'installation de manutention de matériaux, dans lequel au moins un autre ou plusieurs des processus de manutention d'unités multiples est un processus de manutention d'unités amont (210) qui déplace des unités jusqu'au stock tampon à accès aléatoire, dans lequel le processus de manutention d'unités amont déplace des unités qui seront débloquées du stock tampon à accès aléatoire jusqu'à une station particulière parmi les stations de conditionnement ;
sur la base d'au moins un débit de sortie cible qui est un objectif pour le débit de sortie d'un type donné de station de conditionnement, évaluer le modèle pour générer un débit de traitement cible particulier qui est un objectif pour le débit de traitement respectif du processus de manutention d'unités amont pour des unités se déplaçant jusqu'au type donné de station de conditionnement ; et
sur la base du débit de traitement cible particulier généré pour le processus de manutention d'unités amont, générer une ou plusieurs instructions pour réguler le débit de traitement respectif d'unités qui sont déplacées jusqu'au type donné de station de conditionnement et traitées par le processus de manutention d'unités amont.

2. Système selon la revendication 1, dans lequel la ou les instructions qui sont générées comprennent une ou plusieurs instructions pour réguler un débit auquel des unités qui sont déplacées jusqu'au type donné de station de conditionnement sont prélevées du stock.

3. Système selon la revendication 1 ou 2, dans lequel le composant de commande de processus est configuré pour :
pour une première période de temps suite à la génération de ladite ou desdites instructions, évaluer le modèle pour déterminer que le débit de traitement mesuré du processus de manutention d'unités amont pour des unités qui sont déplacées jusqu'au type donné de station de conditionnement pendant cette première période de temps dévie du débit de traitement cible particulier ; et
en réponse à cette détermination, générer un deuxième débit de traitement cible pour le processus de manutention d'unités amont pour des unités qui sont déplacées jusqu'au type donné de station de conditionnement, le deuxième débit de traitement cible étant à utiliser pour une ou plusieurs périodes de temps consécutives après la première période de temps ; et
sur la base du deuxième débit de traitement cible, générer une ou plusieurs instructions supplémentaires pour réguler le débit de traitement des unités qui sont déplacées jusqu'au type donné de station de conditionnement et traitées par le processus de manutention d'unités amont particulier pendant ladite ou lesdites périodes de temps consécutives.

4. Système selon la revendication 3, dans lequel le deuxième débit de traitement cible est généré de telle sorte qu'une moyenne du débit de traitement mesuré du processus de manutention d'unités particulier qui est déplacé jusqu'au type donné de station de conditionnement pendant la première période de temps et du deuxième débit de traitement cible utilisé pendant ladite ou lesdites périodes de temps consécutives est égale au débit de traitement cible particulier pour le processus de manutention d'unités amont qui est déplacé jusqu'au type donné de station de conditionnement.

5. Système selon la revendication 3 ou 4, dans lequel, après la ou les périodes de temps consécutives, le composant de commande de processus est configuré pour utiliser le débit de traitement cible particulier de nouveau pour générer une ou plusieurs instructions afin de réguler le débit de traitement respectif des unités qui sont déplacées jusqu'au type donné de station de conditionnement et traitées par le processus de manutention d'unités amont.

6. Système selon l'une quelconque des revendications précédentes, dans lequel le modèle stocké indique en outre des unités qui font partie de différents ensembles d'unités, dans lequel au moins certains desdits processus de manutention d'unités déplacent des éléments d'un ensemble d'unité à un autre ensemble d'unités.

7. Système selon la revendication 6, dans lequel le composant de commande de processus est configuré pour :
évaluer le modèle pour déterminer qu'une quantité d'unités dans l'un desdits ensembles d'unités a atteint un seuil, les unités de la quantité d'unités étant à déplacer jusqu'au type donné de station de conditionnement ; et
en réponse à cette détermination, modifier le débit de traitement cible particulier, et sur la base du débit de traitement cible modifié, générer une ou plusieurs instructions supplémentaires pour réguler le débit de traitement respectif d'unités qui sont déplacées jusqu'au type donné de station de conditionnement et traitées par le processus de manutention d'unités amont.

8. Procédé mis en oeuvre par ordinateur, comprenant :
la génération, dans une mémoire, d'un modèle de processus de manutention d'unités multiples d'une installation de manutention de matériaux, dans lequel le modèle indique pour chaque processus de manutention d'unités un débit de traitement mesuré auquel ce processus de manutention d'unités traite des unités, dans lequel au moins certains des processus de manutention d'unités multiples sont différents types de stations de conditionnement qui traitent des unités débloquées à partir d'un stock tampon à accès aléatoire afin de préparer des cargaisons d'unités à expédier à partir de l'installation de manutention de matériaux, dans lequel au moins un autre ou plusieurs autres des processus de manutention d'unités multiples sont un processus de manutention d'unités amont qui déplace des unités jusqu'au stock tampon à accès aléatoire, dans lequel le processus de manutention d'unités amont déplace des unités qui seront débloquées du stock tampon à accès aléatoire jusqu'à une station particulière parmi les stations de conditionnement ;
sur la base d'au moins un débit de sortie cible qui est un objectif pour le débit de sortie d'un type donné de station de conditionnement, l'évaluation du modèle pour générer un débit de traitement cible particulier qui est un objectif pour le débit de traitement respectif du processus de manutention d'unités amont pour des unités se déplaçant jusqu'au type donné de station de conditionnement ; et
sur la base du débit de traitement cible particulier généré pour le processus de manutention d'unités amont, la génération d'une ou de plusieurs instructions pour réguler le débit de traitement respectif d'unités qui sont déplacées jusqu'au type donné de station de conditionnement et traitées par le processus de manutention d'unités amont.

9. Procédé mis en oeuvre par ordinateur selon la revendication 8, dans lequel le modèle stocké indique en outre des unités qui font partie de différents ensembles d'unités, dans lequel au moins certains desdits processus de manutention d'unités déplacent des éléments d'un ensemble d'unités à un autre ensemble d'unités.

10. Procédé mis en oeuvre par ordinateur selon la revendication 9, dans lequel le procédé comprend :
l'évaluation du modèle pour déterminer qu'une quantité d'unités dans l'un desdits ensembles d'unités a atteint un seuil ; et
en réponse à cette détermination, la génération d'un ou de plusieurs éléments parmi : un message d'alarme pour alerter un agent que le seuil a été atteint, ou un message de recommandation pour fournir une recommandation pour modifier la quantité d'unités dans l'ensemble d'unités respectif.

11. Procédé mis en oeuvre par ordinateur selon la revendication 10, dans lequel ladite recommandation indique un changement d'une quantité d'ouvriers déployés pour un ou plusieurs desdits processus de manutention d'unités.

12. Procédé mis en oeuvre par ordinateur selon l'une quelconque des revendications 9 à 11, dans lequel les unités d'au moins l'un desdits ensembles d'unités sont stockées dans le stock tampon à accès aléatoire comprenant des emplacements d'unités multiples.

13. Procédé mis en oeuvre par ordinateur selon l'une quelconque des revendications 8 à 12, dans lequel les processus de manutention d'unités multiples comprennent un ou plusieurs éléments parmi :
un processus de prélèvement pour prélever des unités sur un ou plusieurs emplacements du stock ;
un processus de transport pour transporter des unités d'un emplacement de l'installation de manutention de matériaux à un autre emplacement de l'installation de manutention de matériaux ;
un processus d'insertion pendant lequel des unités sont déplacées dans un stock tampon à accès aléatoire comprimant plusieurs emplacements d'unités ; ou
un processus de conditionnement pendant lequel une ou plusieurs unités reçues du stock tampon à accès aléatoire sont conditionnées dans des conteneurs d'expédition respectifs à expédier depuis l'installation de manutention de matériaux.

14. Procédé mis en oeuvre par ordinateur selon l'une quelconque des revendications 8 à 13, dans lequel ledit au moins un taux de sortie cible pour le type donné de station de conditionnement est basé sur : un taux auquel des unités sont censées être conditionnées en cargaisons avant d'être expédiées à partir de l'installation de manutention de matériaux ou un taux auquel des cargaisons sont censées être traitées à l'intérieur de l'installation de manutention de matériaux.

15. Support de stockage lisible par ordinateur, stockant des instructions de programme exécutables par ordinateur sur un système informatique pour mettre en oeuvre un composant de commande de processus configuré pour effectuer le procédé selon l'une quelconque des revendications 8 à 14.
